# EUROPEAN PATENT APPLICATION

(11) **EP 4 811 714 A1**
(43) Date of publication of application: **23.09.2026**
(21) Application number: 24890504.4
(22) Date of filing: 31.10.2024
(51) Int. Cl.: H04L 9/00

(54) **METHOD FOR IMPLEMENTING ROLLUP OF LAYER-2 NETWORK, AND LAYER-2 NETWORK**

(30) Priority: 16.11.2023 CN 202311537959
(71) Applicant: Ant Blockchain Technology (Shanghai) Co., Ltd., Shanghai 200010 (CN)
(72) Inventor: HU, Wenbo, Shanghai 200010 (CN); ZHOU, Chenhui, Shanghai 200010 (CN); LI, Yuwen, Shanghai 200010 (CN); ZHUO, Haizhen, Shanghai 200010 (CN); WEI, Changzheng, Shanghai 200010 (CN); YAN, Ying, Shanghai 200010 (CN); JIANG, Guofei, Shanghai 200010 (CN)
(74) Representative: Winter, Brandl - Partnerschaft mbB
(86) International application number: PCT/CN2024/128764
(87) International publication number: WO 2025/103147

(57) **Abstract**

This disclosure provides a method for implementing rollup of a layer 2 network, including: pulling, transactions from a transaction pool, sorting and packaging the pulled transactions, generating a first transaction root of the packaged transactions, executing the packaged transactions sequentially based on initial states , and generating a first post-state root; sending to a prover of the layer 2 network, the packaged transactions, the first transaction root, the initial states, and a first pre-state root and the first post-state root that correspond to the initial states; and verifying the first transaction root and the first pre-state root; and executing the packaged transactions, generating a second post-state root, putting a signature to information of the packaged transactions by using a secret key in the trusted execution environment, using the signature as a proof, and sending the proof to a blockchain ledger of a mainnet by using a second mainnet transaction.

## Description

This application claims priority to and benefits of Chinese Patent Application No. 202311537959.4, filed with the China National Intellectual Property Administration on November 16, 2023 and entitled "METHOD FOR IMPLEMENTING ROLLUP OF LAYER 2 NETWORK AND LAYER 2 NETWORK", which is incorporated herein by reference in its entirety.

### TECHNICAL FIELD

Embodiments of this specification relate to the field of blockchain technologies, and in particular, to a method for implementing rollup of a layer 2 network and a layer 2 network.

### BACKGROUND

There is a classic CAP theorem in a distributed system: Consistency, Availability, and Partition tolerance. The three cannot be obtained simultaneously, which is referred to as an "impossible triangle" problem for short. There is also an impossible triangle in a blockchain: efficiency, decentralization, and security. Although there is no clear theoretical argumentation for the "impossible triangle" in the blockchain, it is a summary of an existing blockchain. The efficiency, decentralization, and security herein are respectively defined as follows: Efficiency: A number of transactions processed per second, that is, Transaction per Second (TPS).

Decentralization: A participation node threshold is low enough to ensure that there are a large number of distributed nodes in a system.

Security: it is very difficult to launch an attack on a blockchain.

For the foregoing problem of "impossible triangle" in the blockchain, security and decentralization are selected for Ethereum (that is, Ethereum, also referred to as "Mainnet" or "Layer1", Mainnet or Layer1; in addition, currently popular public chain projects such as BSC of Binance and TRON also fall within the range of the Layer1/Mainnet), and efficiency is sacrificed, and currently has only approximately 12 to 15 TPS. When a large number of transactions need to be processed, especially when there are many transactions with complex operations, Layer1 is congested. In addition to ordinary transfer transactions, Layer1 is also used as a main platform of hot applications such as DeFi (decentralized finance) and NFT (non-fungible token). When transactions prevail, a problem of congestion of Layer1 becomes very severe, causing a large transaction delay, and affecting use of users.

In addition, a high Gas fee (gas fee, or transaction fee) often becomes an obstacle to transactions. Although a change has been made from a PoW (proof of work) to a PoS (proof of stake), this only changes a manner of obtaining an accounting right on a blockchain, and transaction fees needing to be paid to nodes obtaining the accounting right are not apparently reduced. This is because the design of the Gas fee aims at consumption of executing transactions (including executing smart contract code) by nodes, and the Gas fee is not reduced when the consumption is not changed. For example, a transaction fee of a currency exchange transaction of a decentralized exchange may exceed 100 United States dollars in congestion. This is prohibitive for many users.

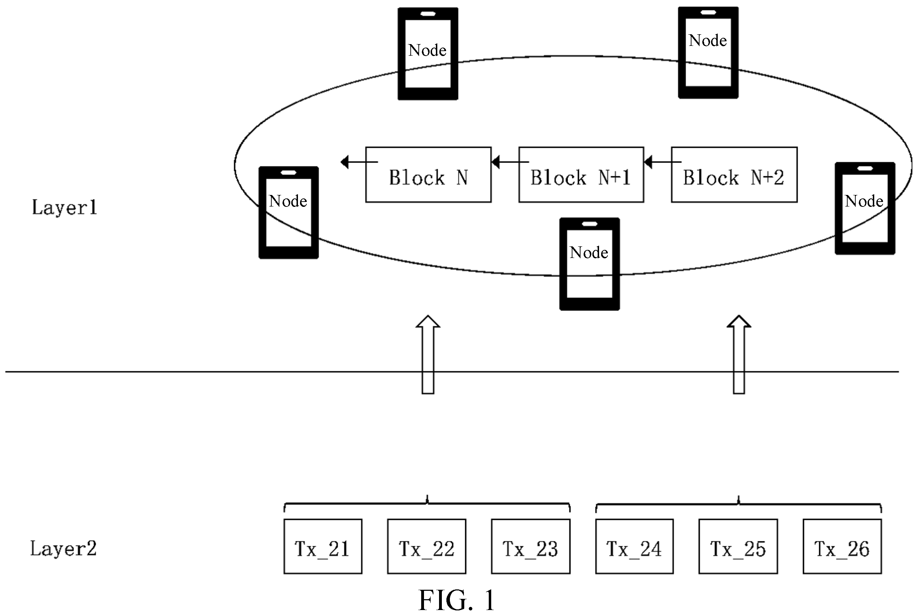

The Layer 2 technology is an extensible solution built on Layer1, and aims to solve problems of low efficiency and high transaction fees of Layer1. As shown in FIG. 1, a transaction may be quickly executed on Layer2, and Layer2 synchronizes a final state back to Layer1 according to an occasion. Layer2 is used to specially provide high-speed transaction processing, and security and decentralization are ensured by Layer1. In this way, when a pressure on Layer1 is reduced, a Gas fee for executing a transaction on Layer2 can be greatly reduced, and a Gas fee required for synchronizing a final state of executing the transaction on Layer2 (instead of all states on Layer2) back to Layer1 can also be greatly reduced. The technology of constructing Layer 2 above Layer1 actually separates an execution process of a transaction or a contract and saving of a final state. The execution process is put on Layer2, and Layer1 only needs to save the final state. In this design, correctness of an execution process of the transaction or the contract on Layer2 needs to be ensured, and a state written into Layer1 is consistent with a result of correct execution on Layer2.

Layer2 of Ethereum includes a mechanism called Rollup. A core idea of Rollup is shown in FIG. 1. A credential that can verify a transaction process is saved on Layer1, and the transaction process (calculation process) and a state are stored and run in Layer2. The credential of the transaction process includes a state obtained before a group of transactions are executed (Pre-State), a state obtained after the group of transactions are executed (Post-State), and the group of transactions. The certificate may be used to verify whether state transfer corresponding to the group of transactions is correct, and may be further used to restore execution processes of all transactions and states of all accounts on Layer2, thereby eliminating security risks brought by data availability on Layer2.

### SUMMARY

This specification is to provide a method for implementing rollup of a layer 2 network and a layer 2 network, which are implemented in the following manners:
A method for implementing rollup of a layer 2 network, including:
pulling, by a sequencer of the layer 2 network, transactions from a transaction pool, sorting and batching the pulled transactions, generating a first transaction root of the batched transactions, executing the batched transactions sequentially based on initial states obtained before the batched transactions are executed, and generating a first post-state root;
sending, by the sequencer, to a prover of the layer 2 network, the batched transactions, the first transaction root, an SPV proof of a read set obtained before the batched transactions are executed, a first pre-state root, and the first post-state root, where the prover is implemented by using a trusted execution environment; and
verifying, by the prover, the first transaction root and verifying the first pre-state root based on the SPV proof of the batched transaction read set; executing the batched transactions sequentially after the first transaction root and the first pre-state root are verified successfully, and generating a second post-state root; and signing information of the batched transactions by using a secret key in a trusted execution environment after verifying that the second post-state root is equal to the first post-state root, using the signature as a proof, and sending the proof to a blockchain ledger of the mainnet by using a second mainnet transaction.

A method for implementing rollup of a layer 2 network, including:
pulling, by a sequencer of the layer 2 network, transactions from a transaction pool, sorting and batching the pulled transactions, and then sending the batched transactions to an executor, where
the executor and a prover perform S1 and S2 in parallel:
   S1: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, the initial states obtained before the post-order batched transactions are executed, and a first pre-state root and the first post-state root that correspond to the initial states, where the prover is implemented by using a trusted execution environment; and
   S2: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

A method for implementing rollup of a layer 2 network, including:
pulling, by a sequencer of the layer 2 network, transactions from a transaction pool, sorting and batching the pulled transactions, and then sending the batched transactions to an executor, where
the executor and a prover perform S3 and S4 in parallel:
   S3: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, an SPV proof of a read set obtained before transactions in an (N+1)^{th} batch are executed, a first pre-state root, and the first post-state root, where the prover is implemented by using a trusted execution environment; and
   S4: the prover verifies a first transaction root of pre-order batched transactions and verifies the first pre-state root based on an SPV proof of a pre-order batched transaction read set; and executes the pre-order batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of a mainnet by using a second mainnet transaction.

A method for implementing rollup of a layer 2 network, including:
pulling, by a sequencer of the layer 2 network, transactions from a transaction pool, sorting and batching the pulled transactions, then grouping transactions that do not have a dependency relationship, and sending different groups an executor participant;
generating, by the executor participant, a first transaction root of the batched transactions by using one executor; sequentially executing, by at least two executors, different transaction groups in the batched transactions respectively based on initial states obtained before the batched transactions are executed, and combining, by the one executor, execution results of all the transaction groups and generating a first post-state root; and sending, by the executor participant, to a prover of the layer 2 network, the batched transactions, the first transaction root, the initial states obtained before the transactions are executed, and a first pre-state root and the first post-state root that correspond to the initial states, where the prover is implemented by using a trusted execution environment; and
verifying, by the prover, the first transaction root of the batched transactions and the first pre-state root; and executing the batched transactions sequentially based on the initial states after the first transaction root and the first pre-state root are verified successfully, generating a second post-state root, signing information of the batched transactions by using a secret key in the trusted execution environment after verifying that the second post-state root is equal to the first post-state root, using the signature as a proof, and sending the proof to a blockchain ledger of a mainnet by using a second mainnet transaction.

A method for implementing rollup of a layer 2 network, including:
pulling, by a sequencer of the layer 2 network, transactions from a transaction pool, sorting and batching the pulled transactions, and then sending the batched transactions to an executor participant;
generating, by the executor participant, a first transaction root of the batched transactions by using one executor, grouping transactions that do not have a dependency relationship, and then sending different groups to at least two executors; sequentially executing, by at least two executors, different transaction groups in the batched transactions respectively based on initial states obtained before the batched transactions are executed, and combining, by one executor, execution results of all the transaction groups and generating a first post-state root; and sending, by the executor participant, to a prover of the layer 2 network, the batched transactions, the first transaction root, the initial states obtained before the transactions are executed, and a first pre-state root and the first post-state root that correspond to the initial states, where the prover is implemented by using a trusted execution environment; and
verifying, by the prover, the first transaction root of the batched transactions and the first pre-state root; and executing the batched transactions sequentially based on the initial states after the first transaction root and the first pre-state root are verified successfully, generating a second post-state root, signing information of the batched transactions by using a secret key in the trusted execution environment after verifying that the second post-state root is equal to the first post-state root, using the signature as a proof, and sending the proof to a blockchain ledger of a mainnet by using a second mainnet transaction.

A method for implementing rollup of a layer 2 network, including:
pulling, by a sequencer of the layer 2 network, transactions from a transaction pool, sorting and batching the pulled transactions, then grouping transactions that do not have a dependency relationship, and sending different groups an executor participant;
generating, by the executor participant, a first transaction root of post-order batched transactions by using one executor; sequentially executing, by at least two executors, different transaction groups in the post-order batched transactions respectively based on initial states obtained before the post-order batched transactions are executed, and combining, by the one executor, execution results of all the transaction groups and generating a first post-state root; and sending, by the executor participant, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment; and
verifying, by the prover, a first transaction root of pre-order batched transactions and the first pre-state root; and executing the pre-order batched transactions sequentially based on the initial states after the first transaction root and the first pre-state root are verified successfully, generating a second post-state root, signing information of the pre-order batched transactions by using a secret key in the trusted execution environment after verifying that the second post-state root is equal to the first post-state root, using the signature as a proof, and sending the proof to a blockchain ledger of a mainnet by using a second mainnet transaction.

A method for implementing rollup of a layer 2 network, including:
pulling, by a sequencer of the layer 2 network, transactions from a transaction pool, sorting and batching the pulled transactions, and then sending the batched transactions to an executor participant;
performing S5 and S6 in parallel:
   S5: the executor participant generates a first transaction root of the post-order batched transactions by using one executor, groups transactions that do not have a dependency relationship, and then sends different groups to at least two executors; at least two executors sequentially execute different transaction groups in the batched transactions respectively based on initial states obtained before the post-order batched transactions are executed, and one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment; and
   S6: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, generate a first transaction root of the batched transactions, execute the batched transactions sequentially based on initial states obtained before the batched transactions are executed, and generate a first post-state root; and the sequencer is configured to send, to a prover of the layer 2 network, the batched transactions, the first transaction root, an SPV proof of a batched transaction read set obtained before the batched transactions are executed, and a first pre-state root and the first post-state root that correspond to the initial states; and
the prover is configured to verify the first transaction root and verify the first pre-state root based on the SPV proof of the batched transaction read set; execute the batched transactions sequentially after the first transaction root and the first pre-state root are verified successfully, and generate a second post-state root; and put a signature to information of the batched transactions by using a secret key in a trusted execution environment after verifying that the second post-state root is equal to the first post-state root, use the signature as a proof, and send the proof to a blockchain ledger of the mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor, where
the executor and a prover perform S1 and S2 in parallel:
   S1: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, the initial states obtained before the post-order batched transactions are executed, and a first pre-state root and the first post-state root that correspond to the initial states, where the prover is implemented by using a trusted execution environment; and
   S2: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor, where
the executor and a prover perform S3 and S4 in parallel:
   S3: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, an SPV proof of a read set obtained before transactions in an (N+1)^{th} batch are executed, a first pre-state root, and the first post-state root, where the prover is implemented by using a trusted execution environment; and
   S4: the prover verifies a first transaction root of pre-order batched transactions and verifies the first pre-state root based on an SPV proof of a pre-order batched transaction read set; and executes the pre-order batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of a mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, then group transactions that do not have a dependency relationship, and send different groups an executor participant;
the executor participant generates a first transaction root of the batched transactions by using one executor; at least two executors sequentially execute different transaction groups in the batched transactions respectively based on initial states obtained before the batched transactions are executed, and the one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, where the prover is implemented by using a trusted execution environment; and
the prover verifies the first transaction root of the batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor participant;
the executor participant generates a first transaction root of the batched transactions by using one executor, groups transactions that do not have a dependency relationship, and then sends different groups to at least two executors; at least two executors sequentially execute different transaction groups in the batched transactions respectively based on initial states obtained before the batched transactions are executed, and one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, where the prover is implemented by using a trusted execution environment; and
the prover verifies the first transaction root of the batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, then group transactions that do not have a dependency relationship, and send different groups an executor participant;
the executor participant generates a first transaction root of post-order batched transactions by using one executor; at least two executors sequentially execute different transaction groups in the post-order batched transactions respectively based on initial states obtained before the post-order batched transactions are executed, and the one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment; and
the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

A layer 2 network includes a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor participant;
an executor and the prover perform S5 and S6 in parallel:
   S5: the executor participant generates a first transaction root of the post-order batched transactions by using one executor, groups transactions that do not have a dependency relationship, and then sends different groups to at least two executors; at least two executors sequentially execute different transaction groups in the batched transactions respectively based on initial states obtained before the post-order batched transactions are executed, and one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment; and
   S6: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

According to the foregoing embodiments of this application, the TEE is used as the prover on the layer 2 network. Because the speed of replaying the transaction and performing verification in the TEE is close to the speed of native execution, a lower delay may be brought.

### BRIEF DESCRIPTION OF THE DRAWINGS

To describe the technical solutions in the embodiments of this specification more clearly, the following briefly describes the accompanying drawings required for describing the embodiments. Apparently, the accompanying drawings in the following description show merely some embodiments recorded in this specification, and a person of ordinary skill in the art may still derive other drawings from these accompanying drawings without creative efforts.
FIG. 1 is a schematic principle diagram of Layer2 according to an embodiment;
FIG. 2 is a schematic principle diagram of Layer2 according to an embodiment;
FIG. 3 is a schematic principle diagram of Layer2 according to an embodiment;
FIG. 4 is a schematic principle diagram of Layer2 according to an embodiment;
FIG. 5 is a schematic principle diagram of Layer2 according to an embodiment;
FIG. 6 is a schematic principle diagram of Layer2 according to an embodiment;
FIG. 7 is a schematic principle diagram of an MPT tree according to an embodiment;
FIG. 8 is a schematic principle diagram of an MPT tree according to an embodiment;
FIG. 9 is a schematic principle diagram of Layer2 according to an embodiment;
FIG. 10 is a schematic principle diagram of Layer2 according to an embodiment;
FIG. 11 is a schematic principle diagram of Layer2 according to an embodiment;
FIG. 12 is a schematic principle diagram of a DAG according to an embodiment.

### DETAILED DESCRIPTION

To make a person skilled in the art to better understand the technical solutions of this specification, the technical solutions in the embodiments of this specification are described clearly and completely below with reference to the accompanying drawings in the embodiments of this specification. Apparently, the described embodiments are merely some rather than all of the embodiments of this specification. All other embodiments obtained by a person of ordinary skill in the art based on embodiments of this specification shall fall within the protection scope of this specification.

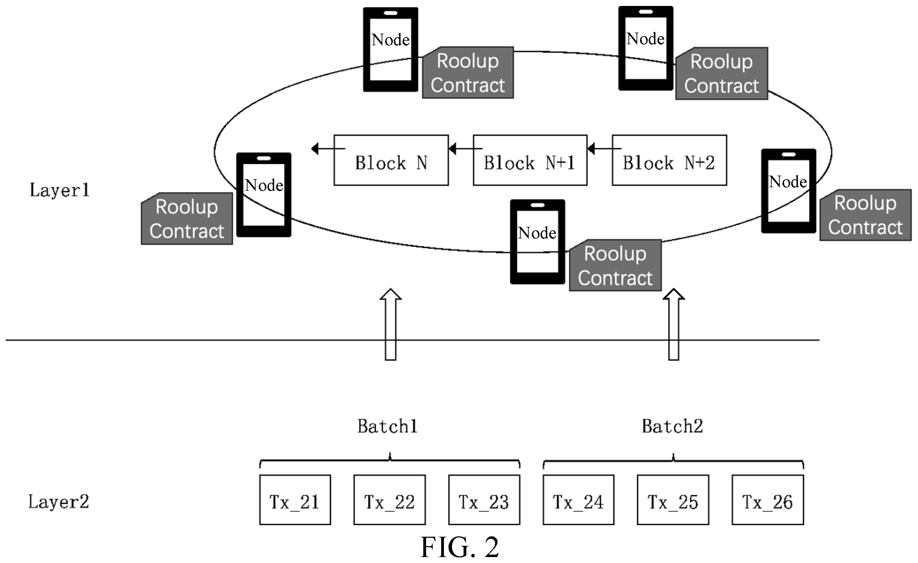

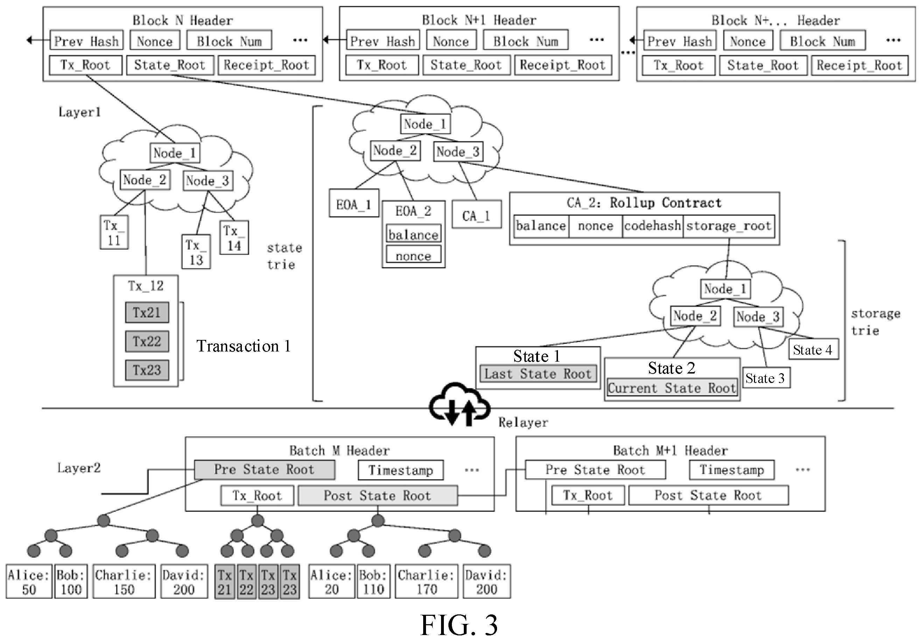

The principle of Rollup may be specifically shown in FIG. 2 and FIG. 3 (OP-Rollup is mainly shown below in FIG. 3).

A transaction of creating a smart contract is sent to Layer1, and after a consensus of Layer1 is reached, nodes on Layer1 may execute the transaction, to complete deployment of the contract. Specifically, the transaction may be executed by an EVM/WASM of a blockchain node. The EVM is a Turing complete virtual machine, which means that various complex logics can be implemented by using the EVM. This is also one of the largest improvements of Ethereum, as a representative of the blockchain 2.0, relative to the blockchain 1.0. A smart contract published and called by a user in Ethereum may run on the EVM. After the transaction of deploying the smart contract is executed, a contract account corresponding to the smart contract is generated on Layer1. The contract account has an on-chain address, and includes a balance, a counter nonce, a hash value Codehash of contract code, and a root Storage_Root of contract storage. The code and the account storage of the contract may be saved in the contract account by using Codehash and Storage_Root. Behavior of the smart contract is controlled by the contract code, and a contract state is saved in the account storage of the smart contract. In other words, the smart contract causes a virtual account including the contract code and the account storage (Storage) to be generated on a blockchain. Subsequently, a node on Layer1 may receive a transaction request for calling the deployed smart contract. The transaction request may include an address of the called contract, a function in the called contract, and an input parameter. Generally, after a consensus on the transaction request is reached, each node in the blockchain may independently execute the called smart contract that is designated.

Storage_root in Ethereum is a hash of a root node of an MPT tree, and the MPT tree organizes storage of a state of a contract account. The MPT is fully referred to as a Merkle Patricia Tree, and is a tree-shaped structure combining a Merkle Tree (Merkle Tree) and a Patricia Tree (a compressed prefix tree, a more space-saving Trie tree, and a dictionary tree). The Merkle Tree algorithm calculates a Hash value for each transaction, and then connects every two transactions to calculate a Hash again, all the way to a top-most Merkle root. An improved MPT tree used in Ethereum is, for example, a 16-ary tree structure, and is usually also referred to as an MPT tree for short. Actually, an Ethereum block header includes tree roots of three MPT trees, which are respectively Transaction_Root (Tx_Root for short), State_Root, and Receipt_Root. State_Root is a hash value of a root of an MPT tree formed by states of all accounts in a current block, that is, a state trie (state trie) in an MPT form points to State_Root. A part of values of all nodes from a root node to leaf nodes of the MPT are sequentially concatenated to form an account address and use the account address as a key. Account information stored in the leaf nodes is a value corresponding to the account address. In this way, a key-value pair is formed. Specifically, the key may be sha3 (Address), that is, a hash value (for example, a hash algorithm is the sha3 algorithm) of an account address, and a value stored in the key may be rlp (Account), that is, rlp (Recursive Length Prefix, Recursive Length Prefix) code of account information. The account information is a four-tuple formed by [nonce, balance, storageRoot, codeHash]. For an externally owned account (Externally Owned Account, EOA), generally, there are only two pieces: nonce and balance, and an empty string/an all 0 string are stored by default in storageRoot and codeHash fields. That is, the externally owned account neither stores the contract, nor stores a state variable generated after the contract is executed. The contract account usually includes Nonce, Balance, Storage root, and CodeHash. Regardless of an externally owned account or a contract account, account information of the externally owned account or the contract account is usually located in an independent leaf node (Leaf Node).

For a contract account (Contract Account, CA) in a state trie, storage_root of the contract account points to another tree that is in the same MPT form, and stores data of a state variable (state variable) related to contract execution. The tree that is in the MPT form and to which storage_Root points is a Storage Trie, that is, storage_Root stores a hash value of a root node of the Storage Trie. Generally, the Storage Trie also stores a key-value pair. The key indicates an address of the state variable, and a value of the key may be a result obtained after a location (a value counting from 0) of the state variable declared in the contract is processed by using a rule, for example, sha3 (the location of the state variable declared), or sha3 (the contract name + the location of the state variable declared). The value is used for storing a value (for example, an RLP encoded value) of the state variable. A part of data stored in a path from the root node to a leaf node is connected to form a key, and a value is stored in the leaf node. In the State trie and the Storage trie thereof, a root node and internal nodes other than leaf nodes use cloud shapes in FIG. 3 to represent flexible, complex, and changeable structures thereof.

As shown in FIG. 2, in Rollup, a Rollup Contract may be deployed on Layer1. In Layer2, initiated transactions such as Tx_21 and Tx_22 in the figure may be received. A batch of transactions is referred to as a Batch, and as a whole, is executed and has states updated sequentially. As shown in FIG. 1 and FIG. 2, it is assumed that a Batch 1 may include 3 transactions: Tx_21, Tx_22, and Tx_23, and it is assumed that a Batch 2 may include 3 transactions: Tx_24, Tx_25, and Tx_26. In Layer2, the transactions may be sorted according to a rule, and further, the sorted transactions may be executed sequentially, for example, sorted according to timestamps in the transactions. After transactions in a Batch are executed sequentially, several generated states may be included. For example, the transactions in the Batch 1 are respectively:
Tx_21: Alice → Bob 20, indicating that Alice transfers an asset of 20 units such as Ether coins to Bob;
Tx_22: Alice → Charlie 10, indicating that Alice transfers an asset of 10 units such as Ether coins to Charlie; and
Tx_23: Bob → Charlie 10, indicating that Bob transfers an asset of 10 units such as Ether coins to Charlie.

Before the transactions in the Batch 1 are executed, it is assumed that there are a total of 4 states, which are referred to as initial states of the Batch 1 herein, that is, state values locked by a Pre State Root in FIG. 3, and the state values are respectively:
Alice: 50, Bob: 100, Charlie: 150, and David: 200.

After the transactions in the Batch 1 are executed, the 4 states are updated to final states of the Batch 1, that is, state values locked by a Post State Root in FIG. 3, and the state values are respectively
Alice: 20, Bob: 110, Charlie: 170, and David: 200.

In Layer2, a Merkle tree may be used to organize states obtained before or after the transactions in the Batch 1 are sequentially executed. As shown in FIG. 3, transactions of a Batch and related state changes thereof may be organized together in Layer2. For example, a Merkle root obtained after hash values of the transactions in the Batch 1 are organized according to a Merkle tree is locked in a header (Header) of the Batch. The header is similar to a block header in Layer1, and the Merkle root is Tx_Root in the header of the Batch. Similarly, as described above, a Merkle root obtained after all state values obtained before transactions in the Batch 1 are executed are organized according to the Merkle tree, that is, Pre State Root may be locked in a header of the Batch; and a Merkle root obtained after hashes of all state values obtained after transactions in the Batch 1 are sequentially executed are organized according to the Merkle tree, that is, Post State Root may be locked in a header of the Batch. In addition, for a Batch M, a timestamp (Timestamp) may be further set in a header of the Batch M to record time at which the Batch is generated, and certainly, information of another field may be further set. A Pre State Root in a block header of the (M+1)^{th} Batch is equal to a Post State Root in a block header of the M^{th} Batch, as indicated by a connection line between the two roots in FIG. 3. In this way, a chain structure is formed between Batches.

The Rollup mechanism of Layer2 may include two types: one type is Optimistic-Rollup (Optimistic-Rollup, OP-Rollup for short), and the other type is ZK-Rollup (zero knowledge proof Rollup, ZK refers to zero knowledge, that is, zero knowledge). In the two Rollup mechanisms, the foregoing smart contract - Rollup Contract is deployed on Ethereum.

In the OP-Rollup, at least a TxPool (transaction pool), a Relayer (relayer), and a Sequencer (sequencer) may be set in Layer2.

As shown in FIG. 3, it is assumed that transactions Tx21, Tx23, Tx25, Tx22, Tx26, and Tx24 are collected in the TxPool. The Sequencer sorts and batchs the transactions according to timestamps in the transactions. For example, Tx21, Tx22, and Tx23 are batchd into the Batch M, and a Merkle Root is generated after organizing hash values of the transactions into Merkle tree, and generated Tx_Root in a Header in the Batch M is filled with a hash value of the Merkle Root. It should be noted that, when a tree root of the Merkle tree is calculated, generally, for a case of being less than 2*ⁿ*, a may be assigned to a last transaction by a plurality of copies to supplement 2*ⁿ*. In this way, the tree root of the 2-ary Merkle tree is calculated. As shown in FIG. 3, after Tx23 ranked at the bottom in chronological order is repeated once, 4 transactions are supplemented, even though the quantity of transactions reaches 2². Then, the tree root of the 2-ary Merkle tree may be obtained through calculation. Similarly, the Sequencer sorts the transactions according to the timestamps in the transactions and then batchs Tx21, Tx22, and Tx23 into the Batch M+1, and details are not described herein again.

Before the Batch M is executed, all states include Alice: 50, Bob: 100, Charlie: 150, and David: 200 that are described above. The Sequencer may organize the states into a Merkle tree, and store a hash value of a root node of the Merkle tree in a Pre State Root field of the Batch M Header. Then, the Sequencer may sequentially execute the 3 transactions: Tx21, Tx22, and Tx23. As a result of executing the 3 transactions, new states Alice: 20, Bob: 110, Charlie: 170, and David: 200 that are described above are generated. The Sequencer may organize the updated states into a Merkle tree, and store a hash value of a root node of the Merkle tree in a Post State Root field of the Batch M Header.

Then, the Sequencer may send, by using the Relayer, a transaction 1 for calling the Rollup Contract to Layer1. The transaction 1 includes fields in the Batch M Header and Tx21, Tx22, and Tx23 that are compressed. After being compressed, Tx21, Tx22, and Tx23 can occupy greatly reduced space. The interface in the called Rollup Contract contract may include storing compressed transaction data (Tx21, Tx22, and Tx23) in a cheap (Gas fee is low) location calldata. In the smart contract of Ethereum, calldata is a special data location (data location), and is used for storing input data that is called by using a function. Specifically, calldata data is generally directly stored in transaction data of Ethereum, which usually saves more gas than other data locations (such as memory and storage).

Regarding compression, a size of a simple Ethereum transaction (sending ETH) is approximately 110 bytes. However, a size of ETH transfer performed on Rollup may be reduced to approximately 12 bytes after maximum compression in a current design. The following table shows volumes occupied by fields (parameters) of a transaction in Ethereum and fields of a transaction in Rollup in an example:

**Table 1**

| Parameters | Ethereum (byte count) | Rollup (byte count) |
|---|---|---|
| Nonce | ~3 | 0 |
| Gasprice | ~8 | 0 to 0.5 |
| Gas | 3 | 0 to 0.5 |
| To | 21 | 4 |
| Value | ~9 | ~3 |
| Signature | ~68(2 + 33 +33) | ~0.5 |
| From | 0 (Recover from signature) | 4 |
| Total | ~112 | ~12 |

Implementation details of compression are omitted herein. It should be noted that in an Ethereum transaction, a signature occupies approximately half of a whole volume, and a From field thereof may be 0 byte because the From field may be recovered from the signature. However, in Rollup, BLS aggregation may be used, and on average, a signature of each transaction is compressed to approximately 0.5 byte. Correspondingly, in the Rollup transaction, because a From field of the transaction cannot be recovered from the aggregating signature, 4 bytes need to be solely used for representation herein.

In cryptography, public key cryptography, briefly referred to as public key cryptography, also referred to as asymmetric cryptography, is cryptography using a public key and a secret key in pair (public key-secret key is denoted as pk-sk, where pk represents a public key, and sk represents a secret key), and corresponds to cryptography using only one secret key. The public key cryptography includes an encryption algorithm and a digital signature algorithm. A public key-secret key key pair is a security cornerstone of modern cryptography, and many applications are based on pk-sk, for example, based on https (Hypertext Transfer Protocol Secure, Hypertext Transfer Protocol Secure) application layer encrypted transmission protocol and blockchains.

A secret key usually represents an identity of a party owning the secret key. The secret key can only be possessed by an owner of the secret key and cannot be publicized, and a corresponding public key can be publicized. A signature performed by using a secret key may represent approval of a secret key owner on a type of information in a digital world. Information of the signature may also represent behavior of the secret key owner in a message of a protocol. Generally, one owner owns only one secret key, and then the owner may put a signature to a piece of information by using the secret key of the owner and then send the signature to another party. After receiving the signature, the receiving party may verify the signature by using the corresponding public key. If the verification succeeds, the receiving party may confirm that the owner has signed the information, and the signed information has not been tampered with.

The BLS signature solution is originally a signature solution put forward by Professor DanBoneh et al., Stanford University in 2001, and is constructed based on bilinear mapping. Usually, control by a user over an account of the user is embodied in signing a transaction by using a secret key of the user. A single signature, as shown in the foregoing table, may reach 68 bytes, and occupies a large volume. If a plurality of accounts initiates a plurality of transactions, each account needs to sign each transaction of the account. However, signature aggregation may aggregate a plurality of signatures into one signature, thereby greatly saving byte space of the signature. The aggregation may be aggregation of signatures to a same message by different signers, or may be aggregation of signatures to different messages. In public key aggregation, a plurality of different public keys may be aggregated to form a total public key, and verification on an aggregating signature may be completed by using the total public key, and each public key does not need to participate in calculation when a total signature is verified. Signature aggregation may be usually implemented by using a Schnorr signature algorithm or a BLS signature algorithm. Compared with the Schnorr signature algorithm, the aggregating signature implemented by using the BLS signature algorithm has a smaller volume, which is approximately half that of the aggregating signature implemented by using Schnorr.

The foregoing compression solution and signature aggregation by using BLS are ideal design solutions. Notwithstanding, in actual several Rollup solutions, currently, a compressed transaction still occupies a space of 40 bytes to 50 bytes, and does not include a signature, that is, signature aggregation is not yet implemented by using BLS.

Continuing from the previous text, after the transaction 1 that calls the Rollup Contract is received from Layer1, the transaction 1 is executed on some nodes through a consensus, and the transaction 1 and an execution result thereof are combined with some other transactions and execution results to generate a block, such as a Block N in FIG. 3. The some other transactions may include an ordinary transfer transaction and a transaction related to another smart contract. The ordinary transfer transaction and the transaction related to the other smart contract may both relate to transaction execution. Especially, the transaction about the other smart contract may involve complex execution logic. However, in the transaction 1 herein, calling a function that is stored in a calldata location in the Rollup Contract mainly involves storing in a specified location, that is, does not involve execution of complex contract logic. That is, the Rollup Contract in the Layer1 is mainly used to store, in a specified location, content specified in a transaction sent from the Layer2, and does not involve complex execution logic. For example, as an example, Tx21, Tx22, and Tx23 are stored into Tx_12 in the transaction tree that is locked by Tx_Root in a Block N Header. In addition, in an implementation, the Pre State Root and the Post State Root in the Batch M Header in the transaction 1 may be respectively stored in a state 1 and a state 2 in contract states on Layer1 by using the Rollup Contract. As described above, the state 1 and the state 2 are included in a state trie that is locked by State_Root in the Block N Header, specifically, for example, a storage trie. For distinguishing, the state 1 and the state 2 in the contract states on Layer1 are referred to as, for example, a Last State root and a Current State root respectively. In addition, for simplification, alternatively, only the Current State root may be stored in the contract states on Layer1, and the Last State root is not stored, as shown in the following code example. In some other implementations, like the transaction in Layer2, the Last State root and the Current State root may also be stored in calldata in Layer1, and details are not described herein again. For the former, for example, the following commitBatch () contract interface in Layer1 is called:
function CommitBatch(bytes[] calldata _transactions, bytes32 _preStateRoot, bytes32 _postStateRoot)

Inside the CommitBatch () contract interface, basic check logic may be set, for example, including checking whether a Pre State Root in a current transaction 1 is equal to a Current State Root in contract storage. If yes, a transaction that is on Layer2 and that is imported into the transaction 1 is stored into calldata, and the Current State Root in the contract storage is updated to a Post State Root. Example code is as follows:

| |
|---|
| 1. //check whether a committed state root matches an expected state root |
| 2. require(_preStateRoot == currentStateRoot, "Invalid pre-state root"); |
| 3. |
| 4. //store the transaction into calldata |
| 5. for(uint i = 0; i < _transactions.length; i++) { |
| 6. //it is assumed herein that a transaction has been encoded into bytes, and may be directly stored |
| 7. //during actual implementation, a transaction may need to be decoded and verified |
| 8. calldata.push(_transactions[i]); |
| 9. } |
| 10. |
| 11. //update a state root |
| 12. currentStateRoot = _postStateRoot; |
| 13. |
| 14. //trigger an event, so that an external observer can track a change of a state |
| 15. emit BatchCommitted(_preStateRoot, _postStateRoot, _transactions). |

In the foregoing manner, the OP-Rollup may execute each transaction in Layer2, may bind dozens, hundreds, or even more Layer2 transactions in one Batch, and release only minimum information to Layer1. The minimum information includes the foregoing compressed transactions on Layer2 and hash values of state roots obtained before or after the batch of transactions are executed. As shown above, herein, for example, a transaction on Layer1 may be sent, such as a transaction 1 in FIG. 3. It can be seen that this is equivalent to executing a batch of transactions on Layer2 at a time, but executing only one transaction on Layer1. In addition, the OP-Rollup does not have any attached proof. This is based on the assumption that the submitted information on Layer2 has no fraud or malicious behavior. Therefore, it has a name such as "Optimistic" (optimistic). Although such an assumption exists, for prevention and deterrence, a trader submitting Layer2 information may still be required to pledge some assets (typically on-chain native tokens, such as Ether coins on Ethereum) on Layer1 in a Rollup Contract of OP-Rollup. Although the OP-Rollup is optimistic, a challenge period may still be set on Layer1, and any person may pose a challenge by using a fraud proof within the challenge period. Typical reasons include that the challenger proves that a transaction in the Batch is not correctly executed, that is, execution of the transaction does not generate a correct state. If a transaction in a Batch proves to be invalid, the Batch is also invalid. The Rollup contract on Layer1 may roll back a Batch chain of Layer2 therein, and each of the invalid Batch and all batches after the invalid Batch becomes an orphan block. Once the fraud proof succeeds, a part of the margin is paid to the challenger, and the remaining part is destroyed. On the contrary, if no one submits a fraud proof until the challenge period ends, the Rollup contract may determine the Batch.

The fraud proof is a data validity verification manner used in the Optimistic Rollup solution. Currently, fraud proofs may be classified into a single-round interactive type and a multi-round interactive type.

In implementation of a single-round interactive fraud proof, a transaction that is disputed is replayed once on Layer1, and committed after whether an invalid state exists is detected. For example, Alice, as the verifier, synchronizes data compressed by OP-Rollup to Layer1, and pledges the margin. If the challenger Bob disputes the data, the challenger Bob needs to initiate a challenge within a window period (a challenge period) and pledge the margin as well. A Rollup Contract of the OP-Rollup recalculates transactions in the block on Layer1 to determine rightness or wrongness. A margin of a wrong party will be slashed, and a correct party will be awarded.

For example, the Sequencer on Layer2 batchs and executes Tx21, Tx22, and Tx23, and generates a Header of the Batch M, which includes Merkle roots Pre State Root and Post State Root of global states obtained before or after Tx21, Tx22, and Tx23 are sequentially executed, and others. The Sequencer may send, by using the Relayer, a transaction 1 for calling the Rollup Contract to Layer1. The transaction 1 is, for example, calling a CommitBatch () contract interface of a Rollup Contract contract in the Layer1, and includes fields in the Batch M Header and Tx21, Tx22, and Tx23 that are compressed. Bob is a user on Layer2, and it is assumed that Bob participates in some transactions in the Batch M on Layer2, for example, the foregoing Tx_21: Alice → Bob 20 and Tx_23: Bob → Charlie 10.

Assuming that Bob considers that the state of Bob obtained after Bob transfers 10 to Charlie in Tx_23 executed by the Sequencer is incorrect, Bob may initiate a challenge within a challenge period of the Batch M on Layer1. As a user on Layer2, Bob may obtain all states obtained before each Batch on Layer2 is executed and all states obtained after each Batch is executed, and all transactions in each Batch. This is a precondition. Then, Bob may initiate a challenge to a Rollup Contract contract in Layer1, for example, call a Challenge () contract interface. By using the Challenge () contract interface, Bob may send a Batch number batchIndex for the challenge, a transaction number txIndex therein, and a proof. The proof may include original texts (including a signature of each transaction; a compressed transaction stored in calldata without a signature is used as an example herein) of all transactions in the Batch M for the challenge and a global state obtained before the Batch M is executed. In this way, when the Rollup Contract contract on Layer1 is executed, a verification function may be executed. Execution logic of the verification function includes, for example:
1. Verify, in the challenge initiated by Bob, whether signatures of all original transaction texts are correct.
2. Verify, in the challenge initiated by Bob, whether a root hash of a Merkle tree into which all original transaction texts have transaction signatures removed and are compressed and then organized is the same as the Tx_Root (that is, all transactions in the Batch M are organized into the root hash of the Merkle tree) in the Batch M Header previously sent by the Sequencer by calling CommitBatch () by using the Relayer.
3. Verify, in the challenge initiated by Bob, whether a root hash obtained after global states obtained before the Batch M is executed are organized into a Merkle tree is the same as the Pre State Root previously sent by the Sequencer by calling CommitBatch () by using the Relayer.
4. If verification of each of 1, 2, and 3 succeeds, further simulate that Layer2 sequentially executes all transactions in the Batch M in the challenge initiated by Bob, to generate a Post State Root obtained after the Batch M is executed, and verify whether the Post State Root is the same as the Post State Root previously sent by the Sequencer by calling CommitBatch () by using the Relayer.

If a result of performing step 4 indicates that the Post State Roots are different, it indicates that the Sequencer has a fraud, and a part of the margin may be paid to the challenger by using the Rollup Contract contract.

It should be noted herein that although all compressed transactions on Layer2 exist in calldata on Layer1, in a fraud proof verification process, the compressed transactions in the Batch M in calldata are not directly taken out for execution, but are simulated for execution based on original texts of all transactions in the Batch M that are imported by the challenger. This is because the compressed transactions of the Batch M in calldata are usually used only for restoring execution processes of all transactions and states of all accounts on the Layer2, thereby eliminating security risks brought by data availability on the Layer2. Moreover, authenticity of the compressed transactions of the Batch M in calldata without a signature is to be determined, and the transaction imported by the challenger is a complete transaction, so that validity of the transaction may be verified. In addition, because an initial state cannot be verified, only a state root rather than a state is in the contract storage, unless all transactions are sequentially executed again from the Batch 0 until all states are obtained after the Batch M-1 is executed, which is apparently uneconomic and inefficient.

The foregoing single-round interactive fraud proof adds data that needs to be issued on a chain, all transactions in the Batch M need to be re-executed on the Layer1, and replaying these transactions further causes enormous fuel costs. Therefore, the OP-Rollup is moving to the multi-round interactive proof, to achieve a same target with higher efficiency.

In the multi-round interactive fraud proof, after Bob challenges data synchronized by the Sequencer, the Sequencer needs to bisectionally divide a disputed Batch range into the former and latter ranges and return the former and latter ranges by using, for example, a dispute () contract interface. Then, Bob further selects a bisected range continuing to be challenged. Then, the Sequencer bisects the disputed range. This cycle is repeated until the disputed range is reduced to a specific transaction. Herein, Bob sends an original text (including a signature of each transaction) of a challenged transaction and a global state obtained before the transaction is executed. The Sequencer sends a Pre State Root (also referred to as a state commitment herein) obtained before the challenged transaction is executed and a Post State Root obtained after the challenged transaction is executed, and the Pre State Root and the Post State Root are calculated and determined by the Rollup Contract contract of Layer1 . Specifically, for example, the Rollup Contract contract verifies, based on the Pre State Root obtained before the challenged transaction is executed, a global state obtained before the challenged transaction is executed, executes the challenged transaction based on the global state obtained before the challenged transaction is executed, generates a state obtained after the execution, and generates a Post State Root based on the global state obtained after the challenged transaction is executed. The Post State Root is compared with the Post State Root sent by the Sequencer. If the Post State Roots are different, it indicates that the challenge succeeds; otherwise, the challenge fails. In actual application, Arbitrum uses K-segment instead of using a bisection manner, that is, N instructions are divided into N/K groups each time to search for a fraud instruction, which has higher efficiency.

Therefore, compared with the single-round interactive type, the multi-round interactive type can resolve a dispute at lower costs. For example, the bisection protocol can reduce the volume of data released on a chain (it is not needed to release and submit a state of each transaction), and can also more easily support a complex smart contract and process a dispute with a higher requirement. However, as the number of times of interaction increases, a dispute window period thereof is also longer.

As a whole, because in the design of OP-Rollup, data related to state update and verification needs to be all placed on Layer1, the OP-Rollup is most limited in scalability and throughput improvement, and a waiting period of 7 days or even longer is required. This means that extracting assets from the OP-Rollup causes a delay, and needs to wait for a window period to expire.

ZK-Rollup is different from Optimistic Rollup because ZK-Rollup uses a zero knowledge (zero knowledge) proof technology. ZK refers to a capability of proving something (a transaction or a state) to another party without disclosing necessary information. In ZK-Rollup, similar to OP-Rollup, Tx21, Tx22, and Tx23 are batchd into the Batch M, and a Merkle Root is generated after organizing hash values of the transactions into a Merkle tree, and generated Tx_Root in a Header in the Batch M is filled with a hash value of the Merkle Root; and a Pre State Root, a Post State Root, a Timestamp, and the like are generated to fill the Batch M Header. In addition, Layer2 may further generate an attestation (including a proof) for the batch (for example, by using a cryptographic proof algorithm such as ZK-SNARK). The proof in the attestation may prove that the Post State Root is obtained after the transactions in the batch are correctly executed based on the Pre State Root sequentially. This may be confirmed only by verifying the proof, and the transactions in the Batch do not need to be executed again for verification.

A calculation circuit may be created before the attestation is generated. The circuit actually is a specific algorithm, and may be compiled for logic of verifying a transaction and a state in advance. This pre-compilation process is included in a process referred to as trusted setting, and through the trusted setting process, a proving key (Proving Key) and a verifying key (Verifying Key) may be further generated. The created circuit may be set in a proposer (or referred to as prover, prover) on Layer2. It should be noted that a circuit created for logic of verifying a transaction and a state is bound to a Proving Key and a Verifying Key of the circuit. The Proving Key and the Verifying Key are publicly available, and are bound to the circuit.

A process of generating an attestation may be that a Sequencer batchs and sends all transactions (including a sender, a receiver, and an amount) in a Batch in Layer2 and information such as a Pre State Root, a Post State Root, and a Proving Key obtained before or after the transactions in the Batch are executed to a prover on Layer2. The prover converts the information into a special form, which is referred to as witness (witness; one part of the information is selected as a public input, and the other part is selected as a private input). Then, the prover verifies the validity and correctness of the public input + the private input by using a zero-knowledge proof calculation circuit (a particular algorithm) arranged in the prover. If the verification is correct, the circuit execution succeeds; otherwise, the circuit execution fails. When the circuit execution succeeds, the prover may output a proof, and the proof is used to prove that the batchd data is valid and correct. In addition, the volume of the proof is small, and generally has only tens of bytes. The foregoing attestation generation process is similar to a re-execution process, includes a large amount of circuit calculation, is more complex, and therefore, generally consumes more time.

It should be noted that a private input cannot be inferred backward from the proof. Only a party knowing the verifying key of the zk-SNARK can verify the proof that is encrypted by using the corresponding proving key. The public input may be used for verifying validity and correctness of the batchd data, but cannot be used for obtaining specific content of the batchd data.

By using the zero-knowledge proof, the prover may issue a small proof to Layer1 by using the Relayer, and the proof may be quickly verified by the Rollup Contract. The volume of the proof is small, which further reduces consumption of Gas on Layer1. In addition, in the ZK-Rollup, this verification process is usually automatically completed by using a smart contract, and it is not needed to set a window period like the OP-Rollup, and therefore, asset extraction becomes quicker. This is one of main characteristic differences between the OP-Rollup and the ZK-Rollup.

A specific verification process is as follows: first, a public input (which may be obtained through calculation from a transaction 1 submitted in a Block N, for example, obtained through calculation by automatically executing calculation logic in a Rollup Contract when the transaction 1 is submitted to the Rollup Contract of Layerl), a proof, and a verifying key (the verifying key may be stored by a governance contract on the Layer1 and provided to the Rollup Contract) are inputted to verification logic (for example, a verification algorithm including ZK-SNARK) in a smart contract, and the verification logic checks, by using the verification algorithm, whether the proof is valid. If the proof is valid, the batchd data corresponding to the public input is considered to be valid and correct. If the verification succeeds, the verification algorithm outputs a piece of confirmation information, to prove that the batchd data corresponding to the public input is valid and correct. Otherwise, the verification algorithm outputs a piece of error information indicating invalidity or incorrectness of the data.

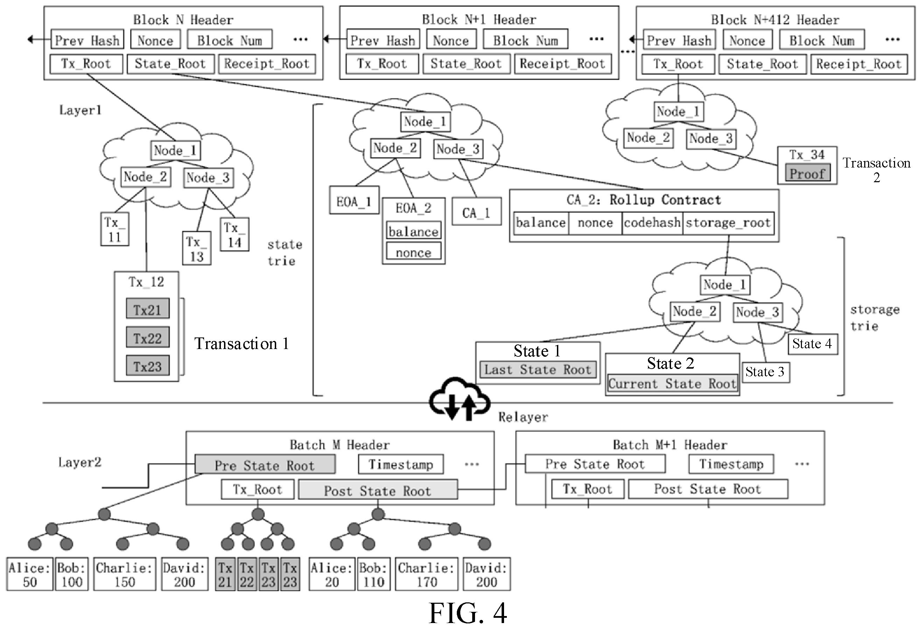

However, a zero knowledge proof such as ZK-SNARK has a very large calculation amount in a process of generating a proof, which also means that it is time-consuming to generate a proof. It is assumed that as shown in FIG. 4, compressed Tx21, Tx22, and Tx23 are stored into calldata in Layer1 by using a transaction 1, and a Post State Root is stored into a Current State Root in a contract state on Layer1. The transaction 1 is located in a Block N of Layer1 as shown in FIG. 4. Therefore, for a delay brought by a complex calculation amount required for generating a corresponding proof in Layer2, a proof of the Batch M may be imported into a Block N+412 on Layer1 through a transaction 2 in a period of time. Apparently, a delay is also caused from Block N to Block N+412, and the delay may approach an hour level.

For the problem of complex calculation and a long time required for generating an attestation, currently, a main solution in the industry mainly includes implementation by engineering massive parallelization proving or acceleration by hardware optimization. However, this is not easy. Implementation of the circuit is complex, does not have high-level language support, and is handwriting R1CS (a frequently-used form in the circuit) in many cases.

Further, to use the ZK proof system, to optimize circuit implementation, an entire state of Layer2 is often optimized into a circuit-friendly structure (a merkle tree). Therefore, the structure of the circuit needs to be considered in the ZK-Rollup system, thereby restricting a Layer2 transaction and an account model. In ZK-Rollup, each of solutions including zksync, StarkNet, Scroll, and the like implements only a specific transaction scenario, and is more difficult to be compatible with an Ethereum virtual machine and support Turing complete. That is, it is very difficult to support a complex contract.

The following is a comparison between characteristics of two Rollup solutions in Layer2, namely, OP-Rollup and ZK-Rollup:

**Table 2**

| | **OP-Rollup** | **ZK-Rollup** |
|---|---|---|
| **Proof type** | Fraud proof | Valid proof |
| **On-chain calculation complexity** | High | Low |
| **TPS** | 100 (may reach 500 with a BLS signature) | 2000 |
| **Off-chain calculation** | Low (provided that the EVM can run) | Very high |
| **complexity** | | |
| **Turing Complete** | Implementable | Difficult to implement |
| **Money withdrawal time** | One to two weeks | Hour level |

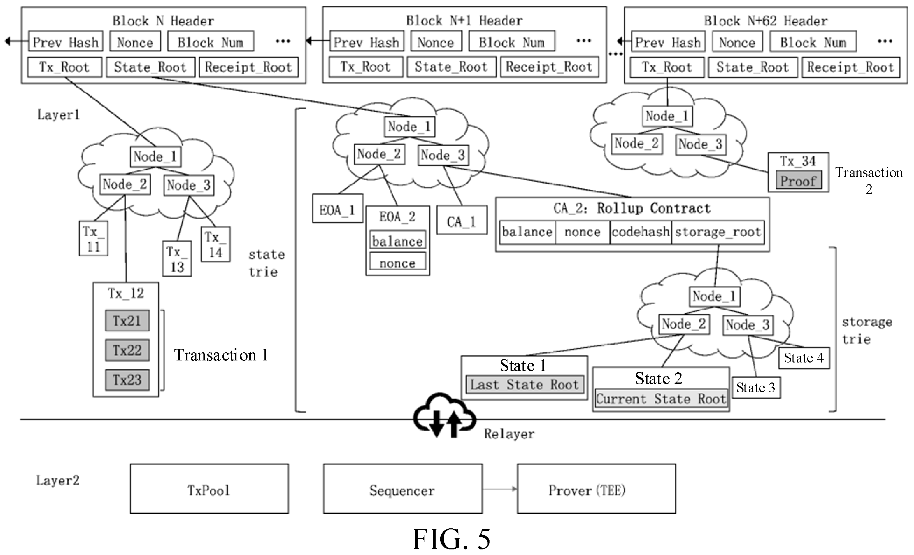

In a method for implementing rollup of a layer 2 network according to this application, an architecture on which Layer2 relies is shown in FIG. 5. Herein, at least a Relayer, a TxPool, a Sequencer, and a Prover are included. As described above, a main function of the Relayer is submitting a transaction or an operation on Layer2 to Layer1, that is, performing a function of bridging Layer1 and Layer2, and may include submitting a user transaction on Layer2 that is batchd by the Sequencer to Layer1, and submitting a proof generated by the Prover on Layer2 to Layer1. Certainly, the Relayer may alternatively not be included. Instead, the Sequencer submits the batchd user transaction on Layer2 to Layer1, and the Prover submits the generated proof to Layer1. Actually, the latter integrates functions of the Relayer into the Sequencer and the Prover. For brief, the role of the Relayer in the entire solution is not emphasized subsequently.

The TxPool is used to receive the transaction sent by the user on the Layer2.

The Sequencer pulls transactions from the TxPool, sorts and batchs the transactions according to timestamps in the pulled transactions. In addition, a Merkle Root is generated after organizing hash values of the transactions into a Merkle tree, and generated Tx_Root in a Header in the Batch M is filled with a hash value of the Merkle Root. For example, as shown in FIG. 4, Tx21, Tx22, and Tx23 are batchd into a Batch M, and after Tx23 ranked at the bottom in chronological order is repeated once, 4 transactions are supplemented. Then, the tree root of the 2-ary Merkle tree is obtained through calculation. In addition, the Sequencer further sequentially executes 3 transactions: Tx21, Tx22, and Tx23 based on states obtained before the transactions in the Batch M are executed. As a result of executing the 3 transactions, a new state is generated. The Sequencer organizes the states obtained before execution into a Merkle tree, and stores a hash value of a root node of the Merkle tree in a Pre State Root field of the Batch M Header; and further organizes the states obtained after the transactions in the Batch M are executed into a Merkle tree, and stores a hash value of a root node of the Merkle tree in a Post State Root field of the Batch M Header.

The Prover may be implemented by using a TEE (Trusted Execution Environment, trusted execution environment).

The TEE is a trusted execution environment that is based on a security extension of CPU hardware and that is completely isolated from the outside. Currently, the industry pays much attention to TEE solutions. Almost all mainstream chip and software alliances have their own TEE solutions, such as TPM (Trusted Platform Module, Trusted Platform Module) in software, Intel SGX (Software Guard Extensions, Software Guard Extensions), ARM Trustzone (Trustzone), and AMD PSP (Platform Security Processor, Platform Security Processor) in hardware. The TEE may play a role of a black box. Even an operating system layer cannot inspect code and data executed in the TEE, and the code and data can be operated only by using a predefined interface in the code. In terms of efficiency, due to the black-box property of the TEE, plaintext data is calculated in the TEE rather than a complex cryptographic operation in homomorphic encryption, resulting in almost no loss in calculation process efficiency. Therefore, the TEE technology can satisfy a trusted computing requirement in a blockchain scenario to a large extent on the premise of a small performance loss.

A method for implementing rollup of a layer 2 network of this application includes the following:
S110: A sequencer of the layer 2 network pulls transactions from a transaction pool, sorts and batchs the pulled transactions, generates a first transaction root of the batched transactions, executes the batched transactions sequentially based on initial states obtained before the batched transactions are executed, and generates a first post-state root.
S120: The sequencer sends, to a prover of the layer 2 network, the batched transactions, the first transaction root, the initial states obtained before the batched transactions are executed, and a first pre-state root and the first post-state root that correspond to the initial state.

Similar to the foregoing description, in Rollup, a Rollup Contract may be deployed on Layer1. In Layer2, the transaction pool TxPool can receive an initiated Layer2 transaction. It is assumed that Layer2 transactions Tx21, Tx23, Tx25, Tx22, Tx26, and Tx24 are collected by the TxPool.

The Sequencer may pull transactions from the transaction pool, and sort and batch the transactions according to timestamps in the transactions. For example, as shown in FIG. 4, Tx21, Tx22, and Tx23 are sorted and batchd into the Batch M, and a Merkle Root is generated after organizing hash values of the transactions into a Merkle tree, and generated Tx_Root in a Header in the Batch M is filled with a hash value of the Merkle Root. The Merkle Root is a first transaction root of the Batch M.

Before the batched transactions are executed, states are, for example:
Alice: 50, Bob: 100, Charlie: 150, and David: 200.

These states may be initial states obtained before the batched transactions are executed.

The Sequencer may organize all state values of the transactions in the Batch M before the transactions are executed according to a Merkle tree and obtain a Merkle root, that is, the first pre-state root. Further, a Merkle root obtained after all state values of transactions in the Batch M before execution are organized according to the Merkle tree, that is, Pre State Root in FIG. 4 may be locked in a header of the Batch M.

The Sequencer may execute the batched transaction based on the initial states sequentially, to generate states obtained after execution, for example:
Alice: 20, Bob: 110, Charlie: 170, and David: 200.

The Sequencer may organize all states obtained after the transactions in the Batch M are sequentially executed according to a Merkle tree and obtain a Merkle root, that is, the first post-state root. Further, a Merkle root obtained after hashes of all state values obtained after transactions in the Batch 1 are sequentially executed are organized according to the Merkle tree, that is, Post State Root may be locked in a header of the Batch.

Then, the sequencer may send, to the prover of the layer 2 network, the batchd Layer2 transactions, the first transaction root, the initial states obtained before the batched transactions are executed, and the first pre-state root and the first post-state root that correspond to the initial state.

In addition, in S110 or S120, the Sequencer (or by using the Relayer) may send a transaction 1 (a first mainnet transaction) for calling the Rollup Contract to Layer1. The transaction 1 includes fields in the Batch M Header and Tx21, Tx22, and Tx23 that are compressed. After being compressed, Tx21, Tx22, and Tx23 can occupy greatly reduced space. The interface in the called Rollup Contract contract may include storing compressed transaction data (Tx21, Tx22, and Tx23) in a cheap (Gas fee is low) location calldata. In the smart contract of Ethereum, calldata is a special data location (data location), and is used for storing input data that is called by using a function. Specifically, calldata data is generally stored in transaction data of Ethereum. The data cannot be changed after being formed into a block in Ethereum, that is, read-only, and usually saves more gas than other data locations (such as memory and storage).

Similar to other contracts, the Rollup Contract contract may be executed in a virtual machine (for example, an Ethereum Virtual Machine, EVM), or certainly may be executed in a container (for example, a docker). This is not limited herein. The Sequencer may (or by using the Relayer; the Sequencer/Relayer initiates, by using an externally owned account on the mainnet) initiate, to the blockchain, a transaction of calling a Rollup Contract on the mainnet, which may trigger execution of the contract. Content of the transaction includes, for example, a from field, a to field, a value field, and a data field. The from field may be an account address of a transaction initiator (an address of an externally owned account of a mainnet of the Sequencer/Relayer), the to field may represent an address of a called smart contract, the value field may be a native token on a blockchain (for example, a value of an Ether coin in Ethereum), and the data field may include a method and a parameter for calling a smart contract. An address of the called smart contract is designated in the to field, which may indicate that a smart contract on a blockchain is called. Generally, the smart contract may include one or more functions, and each function may include some input parameters. In the transaction, a function in the smart contract to be called may be designated by using the data field, and the data field is filled with a parameter that needs to be imported. As described above, the data field may specify that a commitBatch () contract interface is to be called. In this way, when the Rollup Contract contract is executed normally, compressed Tx21, Tx22, and Tx23 in the first mainnet transaction (the transaction 1) may be stored into calldata, a Current State Root in contract storage is updated to a Post State Root, and parameters are imported. Details are not described again.

In one aspect, the result of executing the contract may change storage of the contract, that is, a world state of the contract. In the other aspect, the result of executing the transaction or related information may be recorded in a receipt (receipt) of the blockchain. Specifically, the contract execution result/related information may be presented as an event (event) in the receipt. A structure of an event is, for example, in the following format:
Event:
[topic] [msg]
[topic] [msg]
...

In the foregoing example, there may be one or more events. Each event may include fields such as topic (topic) and data (data). A format of an event outputted during transaction execution may be specified in the contract. By using a built-in SDK, a blockchain client or a blockchain node may listen to an event of a particular topic, pull content of a corresponding msg when the event of the particular topic is monitored, and perform preset processing after the particular topic or some content in the corresponding msg is monitored.

In this event mechanism, the blockchain node on the mainnet may store the execution result in a msg corresponding to a topic, so that the Sequencer/Relayer may listen to the topic by using a built-in blockchain client of the Sequencer/Relayer, and then may obtain the corresponding execution result, which is, for example, that the first mainnet transaction is successfully executed on a Rollup Contract contract on the mainnet.

After the Rollup Contract contract on the mainnet is executed, an event of a particular topic may be generated. After monitoring the corresponding topic, the Prover/Relayer may determine that a transaction previously calling the Rollup Contract contract on the mainnet is executed on the mainnet. In this way, the Prover may perform the following step S130. In this way, the Prover may determine an execution result of the blockchain node on the mainnet by listening to a particular event, and then perform the verification in S130, to avoid that the verification may be performed when the first mainnet transaction is not executed on the mainnet because of some reasons, for example, a reason that the first mainnet transaction is not successfully sent, or a reason that the Rollup Contract contract on the mainnet fails to verify the first mainnet transaction itself. Certainly, alternatively, S130 may be directly performed after S120.

S130: The prover verifies the first transaction root and the first pre-state root; and executes the batched transactions sequentially based on the initial states after the first transaction root and the first pre-state root are verified successfully, generates a second post-state root, signs information of the batched transactions after verifying that the second post-state root is equal to the first post-state root, uses the signature as a proof, and sends the proof to a blockchain ledger of the mainnet by using a second mainnet transaction.

That the prover verifies the first transaction root includes: The prover generates a second transaction root of the batched transactions, and verifies whether the first transaction root is equal to the second transaction root. Specifically, the prover may organize hash values of the batched transactions Tx21, Tx22, and Tx23 into a Merkle tree and then generate a Merkle Root. That is, in a manner the same as that of the Sequencer, the prover organizes hash values of these transactions into a Merkle tree and then generates a Merkle Root. The Merkle Root is the second transaction root. In this way, the prover may verify whether the second transaction root is equal to the first transaction root sent by the Sequencer.

That the prover verifies the first pre-state root includes: The prover generates a second pre-state root in an initial state, and verifies whether the second pre-state root is equal to the first pre-state root. Specifically, the prover may organize, according to a Merkle tree, hash values in initial states that are sent by the Sequencer and generate a Merkle root, that is, the second pre-state root. In this way, the prover may verify whether the second pre-state root is equal to the first pre-state root sent by the Sequencer.

If the prover verifies that the second transaction root is equal to the first transaction root sent by the Sequencer, and the second pre-state root is equal to the first pre-state root sent by the Sequencer, it indicates that the first transaction root and the first pre-state root that are sent by the Sequencer are correct, and then subsequent content may be executed.

The prover may execute the batched transactions sequentially based on the initial states sent by the Sequencer, generate updated states, and organize the updated states into a Merkle tree, thereby obtaining a hash value of a root node of the Merkle tree of the updated states, that is, the second post-state root. Then, the prover may verify whether the second post-state root is equal to the first post-state root. If yes, it indicates that an execution process of the Sequencer is correct because starting from a same initial state, an execution result of sequentially executing the batched transactions by the Sequencer is the same as an execution result of independently sequentially executing the same batched transactions by the prover.

In this way, after verification, the prover may sign information of the batched transactions. Specifically, the prover verifies that a signature may be put to at least one of a Batch number of the batched transactions, a transaction root of the batched transactions, and a Post State Root corresponding to the batched transactions. A signature is put to at least one piece of the content, indicating that the prover accepts a result generated by executing this Batch by the Sequencer.

As described above, a secret key usually represents an identity of a party owning the secret key. The secret key can only be possessed by an owner of the secret key and cannot be publicized, and a corresponding public key can be publicized. A signature performed by using a secret key may represent approval of a secret key owner on a type of information in a digital world. Information of the signature may also represent behavior of the secret key owner in a message of a protocol. Generally, one owner owns only one secret key, and then the owner may put a signature to a piece of information by using the secret key of the owner and then send the signature to another party. After receiving the signature, the receiving party may verify the signature by using the corresponding public key. If the verification succeeds, the receiving party may confirm that the owner has signed the information, and the signed information has not been tampered with.

The prover may be implemented by using a TEE. The TEE has a trusted execution environment completely isolated from the outside, and therefore can hold the secret key in a confidential manner. In this way, after verifying that the foregoing second post-state root is equal to the first post-state root, the prover may put a signature to the information of the batched transactions by using the secret key of the prover, to indicate approval of content of the signature.

TEE technologies include Intel SGX (Intel Software Guard Extension, SGX for short below), AMD SEV, and the like. An SGX technology is used as an example below for description. The Prover in Layer2 may create an Enclave based on the SGX technology, to be used as a TEE for performing verification. The Prover may allocate a partial area of memory as an EPC (Enclave Page Cache, Enclave Page Cache) by using a newly added processor instruction in a CPU, so as to have the foregoing Enclave residing. The memory area corresponding to the EPC is encrypted by a Memory Encryption Engine MEE (Memory Encryption Engine) inside the CPU, content (code and data in the Enclave) in the memory area can be decrypted only in a CPU core, and a key used for encryption and decryption is generated and stored in the CPU only when the EPC is started. It can be seen that, security boundaries of the Enclave include only the Enclave itself and the CPU, neither privileged software nor non-privileged software can access the Enclave, and even an operating system administrator and a VMM (Virtual Machine Monitor, Virtual Machine Monitor; or referred to as Hypervisor) cannot affect the code and the data in the Enclave, thereby having extremely high security. On the premise of the foregoing security guarantee, the CPU can process data in the Enclave, with extremely high operation efficiency, thereby considering both the data security and the calculation efficiency.

Intel starts to provide support for the SGX from the sixth-generation CPU. In addition, before delivery of such a CPU supporting the SGX, a manufacturer burns a Provisioning Key (Provisioning Key) and a Sealing Key (Sealing Key) into a fuse (fuse) register in the CPU. The fuse register is a one-time programmable register. A fuse is blown once data is burned in, so that content in the register can be read only and can no longer be written subsequently. Intel promises that a key burned into a fuse register is randomly generated; and also promises that all backups about a burned-in key are destroyed once burned, that is, even Intel does not know the burned-in key. The Provisioning Key may represent some information in a CPU, for example, a code (such as a sixth-generation core or a seventh-generation core) or a model (such as a desktop type or a mobile type) of the CPU. In consideration of security, operations such as encryption and signature are not directly performed by using the Provisioning Key, but are performed by using an attestation key (attestation key) derived from the Provisioning Key. Therefore, the Provisioning Key plays a deployment role.

Based on an instruction of a user, a User Enclave may be created, to execute program code (for example, transaction execution code, including a virtual machine and a smart contract, loaded into a TEE) specified by the user. In addition, because of the foregoing isolation characteristic of the Enclave, many times, the User Enclave created by the user needs to first prove to the outside that the User Enclave is trusted. This involves attestation of the Enclave, for example, local attestation and remote attestation that are described below.

Before initiating the remote attestation, the CPU may detect whether an attestation key exists. Initialization is initiated if no attestation key exists. During the initialization, an EPID (Enhanced Privacy IDentification) may be generated based on a key generation protocol, through interaction with an Intel server (which may be specifically a Provisioning Enclave in SGX, being an architecture-level Enclave), and according to a Provisioning Key generation rule. The EPID is used as an attestation key, and is generally used as a secret key in asymmetric encryption keys. The generated EPID may be stored in an Enclave for subsequent signature, and the Enclave is generally referred to as a Quoting Enclave. In addition, the EPID may also be stored in a register of the CPU, and acquired from the CPU by only an architectural-level Enclave having permission. In this way, the Quoting Enclave may also acquire the EPID from the register of the CPU. It is mentioned above that in a process of generating the EPID, the SGX (specifically, the aforementioned Provisioning Enclave) may interact with the Intel server, so that Intel may obtain a public key corresponding to the EPID through an interaction process. Particularly, the public key corresponding to the EPID is not publicized, and is retained by only the Intel server. Such a characteristic is applicable to attestation performed by an Intel server (also referred to as an IAS, namely, Intel Attestation Server) in a subsequent remote attestation process.

A developer (or an issuer hereinafter) of an application program may sign code/data that needs to be loaded into an Enclave (for example, transaction execution code, including a virtual machine and a smart contract, loaded into a TEE) by using a secret key of the developer, and then transmit the code/data to the SGX by using the application program. In addition, a public key of the issuer may be further transmitted to the SGX (or a certificate of the issuer may be uploaded, where the certificate includes information signed by the issuer, and the information may include the public key of the issuer; the information may further include a hash value of code/data to be loaded into the Enclave, and the hash value may be used for integrity check of the loaded code/data by the SGX). During execution of the application program, creation of an Enclave may be applied to the SGX by using an instruction set integrated in the CPU, and the Enclave is generally referred to as an Application Enclave (equivalent to the foregoing User Enclave). When creating the Application Enclave, the SGX needs to perform page allocation, program code/data replication, and measurement operations. For the measurement, specifically, the CPU may measure a hash value of code/data loaded into each page, so as to obtain, after loading is completed, a hash value of an Application Enclave into which the code/data is loaded. The hash value is generally referred to as MREnclave, and SHA256 is generally used as a hash algorithm. The MREnclave may be stored in a structure referred to as an SECS (SGX enclave control structure). The SECS is located in an EPC page of an affiliated Enclave, and is configured to record metadata of the Enclave. The metadata includes sensitive information such as an Enclave cryptography measure (that is, MREnclave). Therefore, this structure can be accessed and modified by only an SGX management mechanism of the CPU.

Based on characteristics of the Hash algorithm, if any one of tampering with code/data, allocating a redundant page, and copying malicious code in occurs, or even if only a slight change occurs, a very different result of MREnclave is caused. For different Application Enclaves, values of the MREnclave are also different. Based on such a property, the MREnclave may identify the Enclave in one aspect, and may also be used for integrity verification of the Application Enclave in the other aspect. Through a measurement operation, integrity of the Application Enclave may be verified by using a hash value included in the certificate (the hash value included in the certificate and a MREnclave generation rule are the same, and therefore should be consistent in a normal case), to determine whether the privileged software has tampered with a program/data in a creation process, for example, whether a redundant page is allocated, whether malicious code is copied in, or whether copied data is tampered with.

Specifically, when creating the Application Enclave, the SGX may compare, by using an initialization instruction, the MREnclave mentioned above with a hash value in a certificate signed by an issuer of the Application Enclave. If they match, it indicates that code/data loaded into the Application Enclave is consistent with what is expected, that is, is code/data of the issuer. Otherwise, if they do not match, it indicates that a problem exists in a creating process, and a failure result is returned. If they match, the SGX further hashes the public key of the issuer in the certificate, to obtain MRSigner. Similarly, the MRSigner may be used to identify the issuer. The MRSigner may also be stored in the foregoing SECS.

In this way, the SECS structure is equivalent to an identity of an Enclave from a perspective, and has two identities of the Enclave: MREnclave is a measure of the Enclave, and MRSigner is a measure of the issuer.

Content in the Application Enclave needs to be remotely authenticated, to prove that the Application Enclave is a trusted Enclave created in the valid SGX. As described above, content in the Application Enclave needs to be signed by the EPID in the Quoting Enclave and then be remotely authenticated. This requires interaction between the Application Enclave and the Quoting Enclave. Before this, the Application Enclave needs to prove, to the Quoting Enclave, that the Application Enclave is an Enclave in the same SGX and is trusted. A process that the Application Enclave proves, to the Quoting Enclave, that the Application Enclave is an Enclave in the same SGX is local attestation.

A Message Authentication Code (Message Authentication Code, MAC) algorithm may be used for a local attestation process. The Application Enclave may obtain the MREnclave of the Quoting Enclave, and may generate a report structure (Report) of the signature. Specifically, the Application Enclave may call an EREPORT instruction provided by the CPU. The CPU may generate a symmetric key-REPORT Key by using a root key in combination with the MREnclave, obtained by the Application Enclave, of the Quoting Enclave. In addition, by calling the EREPORT instruction, identity information and an attribute of the Application Enclave, and platform hardware TCB information may be obtained, and used as content of the Report. In addition, data that a user intends to exchange may be further added to the Report. The EREPORT instruction is called, and the REPORT Key and the Report are further calculated by using the MAC algorithm to obtain a first MAC code. The first MAC code may be used as a signature of the Report for integrity verification. The foregoing Application Enclave calls the EREPORT instruction of the CPU, and the CPU may directly obtain the identity information and the attribute of the Application Enclave, and the platform hardware TCB information internally, to ensure that the information is not interfered with by the Application Enclave, and therefore is not tampered with. In addition, the CPU generates a REPORT Key by using a root key in combination with the MREnclave of the Quoting Enclave. This process is also performed inside the CPU, and even the Application Enclave does not know the root key, and therefore, the root key is not leaked. After receiving the Report and the first MAC code, the Quoting Enclave may call an EGETKEY instruction provided by the CPU, and use the MREnclave of the Quoting Enclave as an input parameter, so that the CPU obtains the same REPORT Key according to the same root key and the same MREnclave as those in the EREPORT instruction. Then, the Quoting Enclave may calculate the obtained REPORT Key and the received Report by using the same MAC algorithm to obtain a second MAC code. If the second MAC code is the same as the received first MAC code, it indicates that integrity of the Report sent by the Application Enclave is not destroyed, indicating that the identity information and the attribute of the Application Enclave and the platform hardware TCB information included in the Report are complete. Only two Enclaves in a same SGX can respectively generate a same Report Key by using the EREPOR instruction and the EGETKEY instruction that are provided by the CPU in combination with a same CPU root key. Therefore, after MAC code verification succeeds, the Quoting Enclave may confirm that the Application Enclave is an Enclave in the same SGX.

Through the foregoing process, local attestation is completed, that is, the Quoting Enclave may confirm that the Application Enclave is an Enclave in the same SGX. Based on the local attestation, software outside the SGX may initiate a challenge to the Application Enclave (the software outside the SGX is also referred to as a challenger), and the Application Enclave is required to prove to the challenger that the Application Enclave is a valid Enclave, and a trusted program runs in the Application Enclave. After completing the remote attestation, the challenger may use a service provided by the Application Enclave.

During remote attestation, the challenger may first initiate a challenge to the Application Enclave, and the Application Enclave is required to prove that the Application Enclave is a valid Enclave, and a trusted program runs in the Application Enclave. After receiving the challenge, the Application Enclave may generate a report, and the report is generally referred to as a Quote. The Quote report may include a Hash value of code/data loaded in the Application Enclave, that is, the foregoing MREnclave, and may further include the foregoing MRSigner. After the foregoing local attestation succeeds, content in the Quote may be signed by the Quoting Enclave by using an EPID, and is, for example, recorded as Signature1. The signature may be a signature put to the MREnclave or a signature put to the MREnclave and the MRSigner by the Quoting Enclave by using an EPID. Then, the Application Enclave may send the Quote report to the challenger. Because the challenger does not hold the public key corresponding to the EPID, the challenger cannot verify the signature. The public key corresponding to the EPID is held by Intel Attestation Services (Intel Attestation Services, IAS). Therefore, the challenger sends the Quote to the IAS, and the IAS performs signature verification. After receiving the Quote, the IAS may verify correctness of the signature in the Quote by using the public key corresponding to the EPID, and return an Attestation Verification Report (Attestation Verification Report, AVR). The AVR report may include the Quote report and a verification result of the signature in the Quote, for example, signature verification is correct or incorrect. The IAS may put a signature to content of the AVR report by using a secret key of Intel, add the signature (for example, denoted as Signature2) and a certificate to the AVR report, and return the AVR report to the challenger. After receiving the AVR report, the challenger may verify the signature of Intel by using a public key (corresponding to the secret key of Intel) in the certificate. In addition, the AVR report may not include a certificate. Instead, the challenger downloads a certificate of Intel (where download of the certificate may be provided by an official website of Intel and another authoritative website), and verifies Signature2 by using a public key in the downloaded certificate. By verifying Signature2, it may be confirmed that the AVR report is indeed sent by Intel and is complete. The result of verifying the signature in the Quote that is included in the AVR report may prove whether the SGX represented by the Quote report verified by the IAS is valid. Further, the challenger may verify the MREnclave and the MRSigner in the Quote. For example, the challenger may obtain the MREnclave of the code/data loaded into the SGX and the MRSigner of the issuer from the issuer in advance, to respectively compare them with the MREnclave and the MRSigner in the Quote, to confirm that the code/data loaded into the SGX is trusted and is issued by a valid issuer.

Before the prover signs the information of the batched transactions in S130, the transaction initiator on Layer2 may be used as the challenger to initiate a challenge to the TEE in the prover. This process includes interaction between the TEE in the prover and the IAS, and interaction between the challenger and the IAS. According to the AVR report returned by the IAS, the transaction initiator may confirm that the TEE in the prover is valid and code/data loaded in the prover is trusted. Therefore, the transaction initiator on Layer2 may trust the TEE in the prover.

In addition, after the prover signs the information of the batched transactions in S130, another verifier may also be used as a challenger to initiate a challenge to the TEE in the prover, which is similar to the foregoing process, and details are not described again. In addition, the TEE may hash inputted code/data and then put a signature, so as to guarantee, by using its own credibility, that an input of the execution is also trusted; and the TEE may also sign a hash value of an output (that is, an execution result), and guarantee, by using its own credibility, that an input of the execution is also trusted.

In this way, after verifying that the batched transactions are independently executed (or referred to as replayed) sequentially based on the initial states, the prover signs information of the batched transactions, that is, guarantees, by using the credibility of the prover, that an output result is trusted. Then, the prover may use the signature as a proof and send the proof to the blockchain ledger of the mainnet through the second mainnet transaction. A doubt raised by any person about the signature may be verified by initiating a challenge to the TEE in the prover. This process also needs to interact with the IAS as described above, so as to confirm, from the report returned by the IAS, that the TEE and the code/data loaded in the TEE are trusted, and determine, based on the trust in the TEE, that the transaction information signed by the TEE is trusted.

It should be noted that once the remote attestation succeeds, the CPU can process data in the Enclave by using a TEE mechanism, with extremely high operation efficiency, thereby considering both the data security and the calculation efficiency. This is much faster than the ZK-Rollup manner. For example, in the same case, an interval of time (Block N to Block N+412 in FIG. 4) of an order of 30 to 50 minutes (or referred to as hour) required by ZK-Rollup to generate a proof is shortened to an interval of time (Block N to Block N+62 in FIG. 5) of an order of 5 to 10 minutes. When the monitoring mode is not used, but S130 is directly performed after S120, the time is even shortened to a smaller extent. In addition, the generated proof is a signature, which is approximately tens of bytes in size, and is similar to ZK-Rollup.

Signature verification is a process of verifying a signature by using the public key of the TEE. As long as it is ensured that the public key is trusted, the verification is also trusted and fast. That the prover may use the signature as a proof and send the proof to a blockchain ledger of the mainnet through the second mainnet transaction includes that the prover uses the signature as a proof and sends the proof to the mainnet through the second mainnet transaction, and calls a rollup contract on the mainnet; and the rollup contract verifies, after receiving the transaction, correctness of the signature by using verification logic in the contract.

The foregoing solution is also referred to as an EPID solution. In the foregoing EPID solution, each challenge requires a challenger and a TEE to communicate with a remote IAS, which causes a large delay, and even many running entities cannot access an Intel service during running. Therefore, the improved SGX DCAP attestation protocol provides localization of an IAS. For example, some cloud service platforms and data centers localize an IAS on a supervision machine, and a localized supervision machine is also referred to as a localized verification Service (Verify Service). The SGX DCAP provides trust in a certificate chain manner, and a unique trust root is Intel SGX Root CA.

Intel SGX DCAP, which is fully named Intel Software Guard Extensions Data Center Attestation Primitives, is a remote attestation (attestation) technology specifically designed for a data center environment. As described above, the Intel SGX provides a security protection technology at a hardware level, and can create a secure area referred to as "enclave". Data and code in this area are both encrypted and protected by hardware. Even if an operating system, a virtual machine manager, or a BIOS is attacked, data in this area cannot be stolen or tampered with. In Intel SGX, "attestation" is a mechanism used for proving that code is being run in a real enclave, and code and data have not been tampered with. In a conventional SGX environment, such a check process needs to be performed by using remote Intel Attestation Services (IAS). However, in a data center environment, a large quantity of check operations may need to be performed. Therefore, Intel introduces DCAP, which allows the data center to bear a check service. The DCAP decouples a check process from an Intel service, so that the data center can perform check locally, thereby improving efficiency, enhancing controllability, and reducing dependency on an Intel service. In short, the SGX DCAP is a solution of using an SGX technology in a data center environment, and provides a more efficient and controllable check mechanism.

A verification service (Verify Service) of the data center may obtain a certificate from the Intel IAS, and the certificate usually has a validity period. Within the validity period, when a deployed SGX instance does not interact with Intel, generation of a remote report may be completed through interaction with a local verification service (which is equivalent to a local IAS in this case). After the validity period expires, a verification service of the data center needs to obtain a new certificate from the Intel IAS. The certificate usually includes a public key of a verification service of an Intel signature, and verification of the Intel signature by using the public key of the Intel is provided to ensure that the public key of the verification service in the certificate is trusted. The verification service may sign other content by using a secret key of the verification service, and verification of the Intel signature by using the public key of the verification service is provided to ensure that the public key of the verification service in the certificate is trusted. In addition, the certificate may include a validity period, and functions of the validity period are described above.

A process of implementing the SGX DCAP attestation protocol may be briefly described as follows (for details, refer to the foregoing content):
First, the TEE in the prover creates a protected execution environment (User Enclave) locally, and generates a key pair therein. The key pair includes a public key and a secret key, and the public key is used to generate an attestation report (Quote).

Then, the TEE in the prover submits the public key and some information about the User Enclave (for example, a measurement value thereof) together to a local Quoting Enclave (QE), to request to generate an attestation report. The QE puts a signature to the information, and batchs the signature and other information into the attestation report.

Next, the TEE in the prover submits the attestation report to a verification service (Verify Service). The service verifies validity of the report, signs the public key included in the report, and generates a certificate. The certificate includes a signature of the verification service for the TEE in the prover, and may further include other content, and therefore may also be considered as a remote attestation report generated by the verification service, which is similar to the foregoing remote attestation report.

Finally, the generated certificate is returned to the TEE of the prover, and subsequently, the prover may sign the execution result by using a secret key of the prover, and may provide the certificate. In this way, another person may verify the signature by using the public key in the certificate to ensure that the execution result is trusted. The certificate is issued by the attestation service, that is, is ensured by the attestation service by using a signature of a secret key of the attestation service. Trust of the certificate may be further ensured by a certificate issued by the Intel IAS for the attestation service. The foregoing trust transfer relationship between a plurality of certificates and signatures is a certificate chain principle.

In conclusion, the prover may send the certificate to the blockchain ledger of the mainnet through the second mainnet transaction. In a typical manner, the prover may send a certificate and a signature of the prover together to the blockchain ledger of the mainnet through the second mainnet transaction. When the foregoing EPID solution is used, the certificate includes the remote attestation report generated by the IAS for the prover. In this way, a verifier may determine, by verifying the certificate, that the signature of the prover to the transaction information is valid. When the foregoing DCAP solution is used, the certificate may include a certificate issued by an attestation service to the prover. If the trust is based on trust in the attestation service, the trust may be extended to the certificate issued by the attestation service to the prover, so that the verifier may verify a signature of the prover by using a public key in the certificate. If higher-level trust is required, in addition to a certificate issued by the attestation service to the prover, a remote attestation report generated by the IAS for the attestation service may further need to be included. In this way, it may be ensured by using authoritative attestation of Intel (that is, the remote attestation report, equivalent to a certificate issued by the Intel to the attestation service) that a signature of the attestation service is trusted. In addition to the certificate issued by the attestation service to the prover, the trust may be conducted downward, thereby ensuring that the signature of the prover is trusted. That is, the SGX DCAP provides trust in a certificate chain manner.

Verification logic executed by the foregoing verifier may be built in a Rollup Contract contract, and may be externally provided in a form of a contract interface, such as a verification interface. In this way, that the prover uses the signature as a proof and sends the proof to the mainnet through the second mainnet transaction and specifically a blockchain ledger may be called in the transaction includes that the prover uses the signature as a proof and sends the proof to the mainnet through the second mainnet transaction, and calls a verification interface of the Rollup Contract contract on the mainnet. The signature may be imported through the interface. In this way, verification logic may be executed inside the verification interface, specifically including verifying validity of the signature. A process of verifying the validity of the signature mainly includes verifying the validity of the signature by using the public key of the prover.

In addition, the certificate of the prover corresponding to the signature may be imported together by using the verification interface and the second mainnet transaction, and the certificate may include the public key of the prover. In this way, in addition to verifying validity of a signature by using the public key of the prover, verifying validity of a certificate of the prover may be further included. The certificate, as described above, may include the remote attestation report generated by the IAS for the prover, or include a certificate issued by the attestation service for the prover (or may include the remote attestation report generated by the IAS for the attestation service). Correspondingly, verifying the certificate may include verifying the validity of the certificate of the prover by using an authoritative public key of Intel, or may include verifying the validity of the certificate of the attestation service by using an authoritative public key of Intel, and verifying the validity of the certificate of the prover by using a public key in the certificate of the attestation service.

As described above, the TEE is used as the prover on the layer 2 network. Because the speed of replaying the transaction and performing verification in the TEE is close to the speed of native execution, a lower delay may be brought.

FIG. 4 exemplarily shows a case in which there are 4 global states on Layer2, that is, a case in which four global states of Alice, Bob, Charlie, and David are included. Actually, one Batch on Layer2 may include hundreds or even thousands of transactions, and these transactions may involve more states, for example, tens of thousands of states. If transactions in Layer2 include a transaction involving a contract in Layer2, one contract may involve more states, and therefore, there are more states in Layer2 as a whole, for example, tens of thousands of states. In this way, in S120, the sequencer sends initial states of all the states to the prover in the Layer2 network, resulting in a large data volume. Therefore, a method for implementing rollup of a layer 2 network of this application includes the following:
S210: A sequencer of the layer 2 network pulls transactions from a transaction pool, sorts and batchs the pulled transactions, generates a first transaction root of the batched transactions, executes the batched transactions sequentially based on initial states obtained before the batched transactions are executed, and generates a first post-state root.

A specific process of S210 is similar to that of the foregoing S110, and details are not described herein again.

S220: The sequencer sends, to a prover of the layer 2 network, the batched transactions, the first transaction root, an SPV proof of a read set of the batched transactions obtained before the batched transactions are executed, a first pre-state root, and the first post-state root.

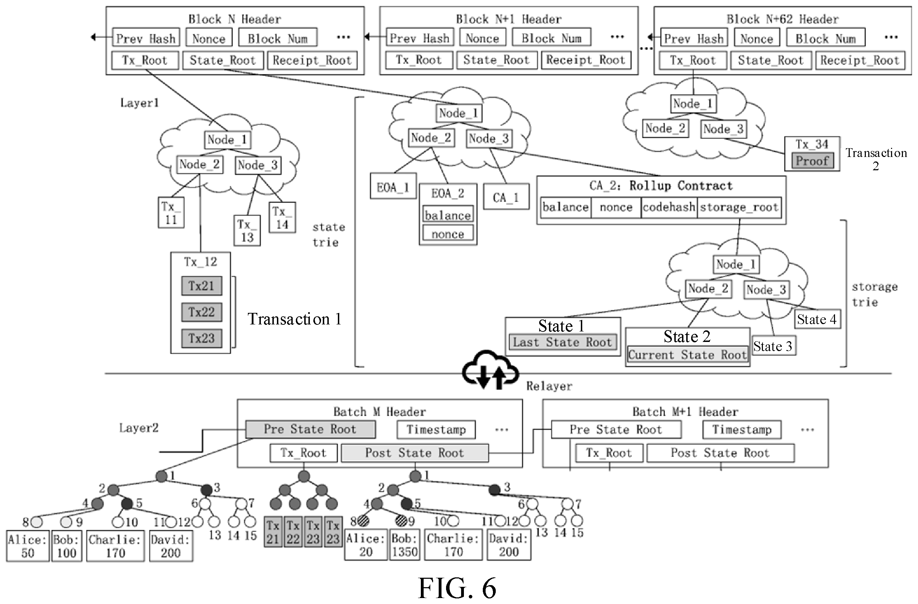

For description, it is assumed that as shown in FIG. 6, transactions (including an ordinary transfer transaction and a contract involved transaction) in Layer2 involves a total of 8 states, such as states corresponding to such 8 hash values as 8, 9, 10, 11, 12, 13, 14, and 15 in the lower left corner of FIG. 6. In addition, it is assumed that states affected before or after the transactions batchd into the Batch M are sequentially executed are Alice and Bob that correspond to 8 and 9, and do not involve states corresponding to such 6 hash values as 10, 11, 12, 13, 14, and 15. As shown in the figure, in this way, after the transactions batchd into the Batch M are sequentially executed, balances of Alice and Bob change, and balances of Charlie and David do not change (that is, hash values of two tree nodes 10 and 11 do not change, and content corresponding to the two nodes 10 and 11 is shown herein; content corresponding to 12, 13, 14, and 15 does not change either, and content thereof is omitted herein).

In addition to sending the batched transactions, the first transaction root, and the first pre-state root and the first post-state root that correspond to the initial states to the prover of the layer 2 network, the sequencer may send the SPV proof of the batched transaction read set obtained before the batched transactions are executed to the prover of the layer 2 network.

As shown in the example in FIG. 6, the sequencer may send states corresponding to tree nodes 8 and 9, and an SPV proof including a hash value of a node 5 and a hash value of a node 3 to the prover of the layer 2 network. In this way, the states corresponding to such 6 leaf nodes as 10, 11, 12, 13, 14, and 15 may be prevented from being sent to the prover.

The SPV is a concept derived from bitcoin and is fully referred to as Simplified Payment Verification, that is, simplified payment verification. The SPV proof works by using a Merkle tree. Herein, the states involved in the Batch M form a Merkle tree, and a root of the tree (that is, a Merkle root) is included in a Header of the Batch M. The structure of the Merkle tree enables a very short path (a Merkle path) to be used to verify whether any state exists in a particular Merkle root. This path includes only some necessary nodes rather than state content corresponding to all leaf nodes.

As shown in an example in FIG. 6, one SPV proof includes states corresponding to two leaf nodes (indicated by yellow) and a Merkle path (indicated by red).

Merkle mentioned in the Merkle path in the SPV proof is a tree-shaped data structure, and may be a Merkle tree in bitcoin, or may be an MPT tree in Ethereum, or may be an SMT, or the like.

The MPT is fully referred to as a Merkle Patricia Tree, and is a tree-shaped structure combining a Merkle Tree (Merkle Tree) and a Patricia Tree (a compressed prefix tree, a more space-saving Trie tree, and a dictionary tree). The Merkle Tree (Merkle Tree) algorithm calculates a Hash value for each transaction, and then connects every two transactions to calculate a Hash again, all the way to a top-most Merkle root. An improved MPT tree used in Ethereum is, for example, a 16-ary tree structure, and is usually also referred to as an MPT tree for short. Using the aforementioned state trie (state trie) in Ethereum as an example, the state trie includes a key and value pair (key and value pair, also written as key-value, k-v or kv for short) of storage content corresponding to each account in the Ethereum network. A "key" (key) in the state trie may be an identifier of 160 bits (for example, an address of an Ethereum account or a part of a hash value of an address, which is collectively referred to as an account address below), and the account address is distributed in storage starting from a root node to a leaf node of the state trie. A "value" in the state trie is generated by encoding information about an Ethereum account (by using a Recursive-Length Prefix encoding (Recursive-Length Prefix encoding, RLP) method). As described above, for an externally owned account, values include nonce and balance; and for a contract account, values include nonce, balance, codehash, and storage_root.

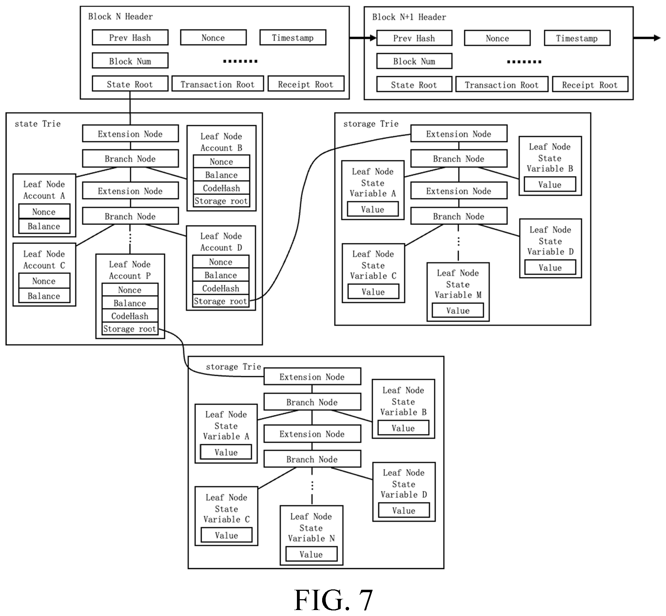

As described above, state_root is a hash value of a root of an MPT tree formed by states of all accounts in a current block, that is, a state trie (state trie) in an MPT form points to state _root. A root node of the MPT tree is generally an extension node (Extension Node) or a branch node (Branch Node), and state_root generally stores a hash value of the root node. As shown in FIG. 7, the root node may be connected to one or more layers of Extension Nodes/Branch Nodes under the root node, and these multilayer tree nodes may be collectively referred to as internal nodes (Internal Nodes). A part of values of all nodes from a root node to leaf nodes of the MPT are sequentially concatenated to form an account address and use the account address as a key. Account information stored in the leaf nodes is a value corresponding to the account address. In this way, a key-value pair is formed. The key may also be a part taken behind sha3 (Address), that is, a part of a hash value (for example, a hash algorithm is the sha3 algorithm) of an account address, and a value stored in the key may be rlp (Account), that is, rlp code of account information. The account information is a four-tuple formed by [nonce, balance, storageRoot, codeHash]. As described above, for an externally owned account, generally, there are only two pieces: nonce and balance, and an empty string/an all 0 string are stored by default in storageRoot and codeHash fields. That is, the externally owned account neither stores the contract, nor stores a state variable generated after the contract is executed. The contract account usually includes Nonce, Balance, Storage root, and CodeHash. Nonce is a transaction counter of the contract account; Balance is an account Balance; a Storage root corresponds to another MPT, and information about a contract-related state can be linked by using the Storage root; and CodeHash is a hash value of the contract code. Regardless of an externally owned account or a contract account, account information of the externally owned account or the contract account is usually located in an independent leaf node (Leaf Node). There may be several branch nodes and extension nodes from the Extension Node/Branch Node of the root node to the Leaf Node of each account.

The state trie may be a tree in an MPT form, and is usually a 16-ary tree, that is, each layer may have at most 16 child nodes. The Extension Node is configured to store a common prefix, and generally has 1 child node, and the child node may be a Branch Node. The Branch Node may have at most 16 child nodes, which may include an Extension Node and/or a Leaf Node.

For a contract account in a state trie, storage_root of the contract account points to another tree that is in the same MPT form, and stores data of a state variable (state variable) related to contract execution. The tree that is in the MPT form and to which storage_Root points is a Storage Trie, that is, storage_Root stores a hash value of a root node of the Storage Trie. Generally, the Storage Trie also stores a key-value pair. The key indicates an address of the state variable, and a value of the key may be a result obtained after a location (a value counting from 0) of the state variable declared in the contract is processed by using a rule, for example, sha3 (the location of the state variable declared), or sha3 (the contract name + the location of the state variable declared). The value is used for storing a value (for example, an RLP encoded value) of the state variable. A part of data stored in a path from the root node to a leaf node through internal nodes is connected to form a key, and a value is stored in the leaf node. As mentioned above, the Storage trie may alternatively be a tree in an MPT form, and is usually also a 16-ary tree. That is, the Branch Node may have at most 16 child nodes, and the child nodes may include an Extension Node and/or a Leaf Node. However, the Extension Node generally may have 1 child node, and the child node may be a Branch Node or a Leaf Node.

For example, for Leaf Node Account P of the state Trie in FIG. 7, the account is a contract account, and a Storage Root of the account locks all states in storage of the contract. The states are organized into an MPT tree, and a tree structure is, for example, a Storage trie linked to the Storage Root. In the linked Storage trie, a Leaf Node State Variable N is used as an example, and is, for example, is a value of storedData exemplified in the foregoing contract code. Then, a key thereof is sha3 (a declaration location of storedData, which is described in detail below), and a value thereof is s (for brevity, an encoding format of the value is omitted herein, and is, for example, RLP, and subsequent description is similar, and is not further described). Values of the key are sequentially distributed from a root node to leaf nodes (that is, Leaf Node Variable N) of the storage Trie.

For another example, for Leaf Node Account C in the state Trie in FIG. 7, the account is an externally owned account, whose key is sha3 (Address C), that is, a hash value of an address of the account C (where the hash algorithm is, for example, the sha3 algorithm), and whose stored value may be (Account), where account information Account is a two-tuple formed by [nonce, balance]. As described above, Account C is an externally owned account, and therefore has account information including two items: nonce and balance (codehash and storage root are omitted herein, and subsequent description is similar). For example, if an externally owned account has nonce of 20 and Balance of 4550, such leaf node as Leaf Node State Variable C stores nonce = 20 and balance = 4550. An address of Account C is a key, whose values are sequentially distributed from a root node to leaf nodes (that is, Leaf Node Variable C) of the state Trie.

These states, including k-v of the externally owned account and k-v of the contract account, are finally stored in a database. The storage in the database does not directly store states of these accounts, that is, not directly store k-v of these accounts, but stores a k-v value of each tree node.

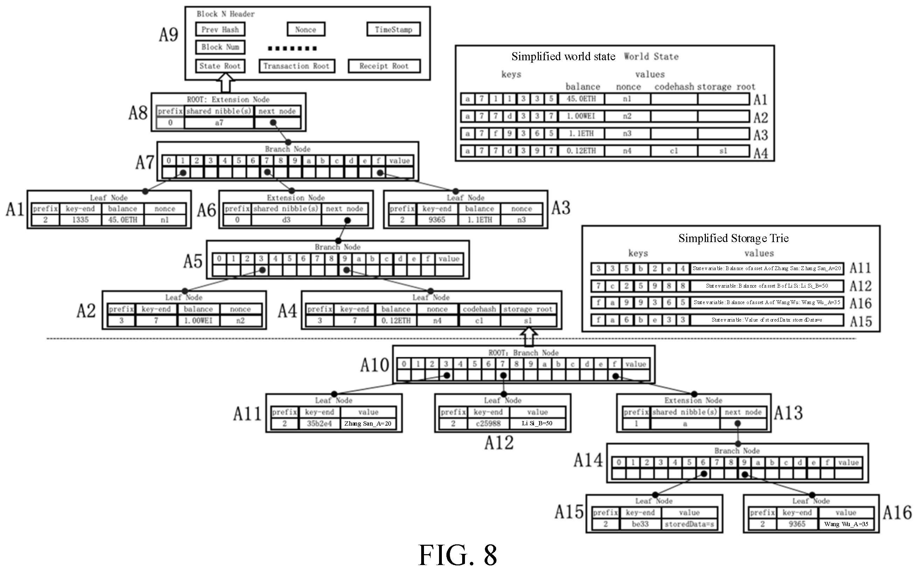

As shown in an example of FIG. 8, in an MPT structure at a previous level, for a leaf node A1, a7 of a shared nibble in a root node A8 (Extension Node), a slot 1 of an internal node A7 (Branch Node), and 1335 of a key-end in the leaf node A1 are sequentially combined to form a key of the leaf node, that is, a711335. Balance = 45.0ETH and Nonce = n1 are stored in the leaf node. For a leaf node A2, a7 of a shared nibble in a root node A8 (Extension Node), a slot 7 of an internal node A7 (Branch Node), d3 of shared nibbles in a node A6 (Extension Node), a slot 3 of an internal node A5 (Branch Node), and 7 of a key-end in the leaf node A2 are sequentially combined to form a key of the leaf node, that is, a77d337. Balance = 1.00WEI and Nonce = n2 are stored in the leaf node. For a leaf node A3, a7 of a shared nibble in a root node A8 (Extension Node), a slot f of an internal node A7 (Branch Node), and 9365 of a key-end in the leaf node A3 are sequentially combined to form a key of the leaf node, that is, a7f9365. Balance = 1.1ETH and Nonce = n3 are stored in the leaf node. For a leaf node A4, a7 of a shared nibble in a root node A8 (Extension Node), a slot 7 of an internal node A7 (Branch Node), d3 of shared nibbles in a node A6 (Extension Node), a slot 9 of an internal node A5 (Branch Node), and 7 of a key-end in the leaf node A4 are sequentially combined to form a key of the leaf node, that is, a77d397. Balance = 0.12ETH, Nonce = n4, CodeHash = c1, and Storage root = s1 are stored in the leaf node, where s1 may be H(A10), that is, a hash value of a root node A10 of a next-layer tree. The leaf nodes of A1, A2, and A3 store information about the externally owned account, and the leaf node of A4 stores information about the contract account. The contract account includes a next-level MPT, to form a Storage Trie, used for storing a state variable in the contract account.

As shown in the example of FIG. 8, in an MPT structure at a next level, for a leaf node A11, a slot 3 of a root node A10 (Branch Node) and 35b2e4 of a key-end in the leaf node A11 are sequentially combined to form a key of the leaf node, that is, 335b2e4. "Zhang San_A = 20" is stored in the leaf node, and indicates, for example, that a type-A digital asset defined in the contract has a quota of 20 belonging to Zhang San, that is, a balance of the type-A asset of Zhang San is 20. For a leaf node A12, a slot 7 of a root node A10 (Branch Node) and c25988 of a key-end in the leaf node A12 are sequentially combined to form a key of the leaf node, that is, 7c25988. "Li Si_B = 50" is stored in the leaf node, and indicates, for example, that a type-B digital asset defined in the contract has a quota of 50 belonging to Li Si, that is, a balance of the type-B asset of Li Si is 50. For a leaf node A15, a slot f of a root node A10 (Branch Node), a of shared nibble in an internal node A13 (Extension Node), a slot 6 of an internal node A14 (Branch Node), and be33 of a key-end in the leaf node A15 are sequentially combined to form a key of the leaf node, that is, fa6be33. "storedData=s" is stored in the leaf node. For a leaf node A16, a slot f of a root node A10 (Branch Node), a of shared nibble in an internal node A13 (Extension Node), a slot 9 of an internal node A14 (Branch Node), and 9365 of a key-end in the leaf node A16 are sequentially combined to form a key of the leaf node, that is, fa99365. "Wang Wu_A = 35" is stored in the leaf node, and indicates, for example, that a type-A digital asset defined in the contract has a quota of 35 belonging to Wang Wu, that is, a balance of the type-A asset of Wang Wu is 35.

In node formation of the foregoing MPT tree, a prefix (prefix) is used to represent a type of a tree node, for example, 0 represents an Extension Node including an even number of shared nibbles (shared nibbles), 1 represents an Extension Node including an odd number of shared nibble(s), 2 represents a Leaf Node including an even number of nibbles, and 3 represents a Leaf Node including an odd number of nibble(s).

In the foregoing node formation, a corresponding location of a former tree node is filled with a hash value of overall content of a latter tree node. The database actually stores a key-value mapping of each tree node, where a value includes content stored in the tree node, and a corresponding key is a hash value of overall content of the tree node. In this way, tree node k-v actually stored in the database is shown in the following table:

**Table 3: Tree node k-v actually stored in the database**

| | |
|---|---|
| Key | Value (which is logically shown, and needs to undergo RLP encoding during persistent storage) |
| H(A9) | Prev Hash: , Nonce: , Timestamp: , Block Num: , State Root: H(A8), Transaction Root: , Receipt Root: , ... |
| H(A8) | prefix: 0, shared nibble(s): a7, next node: H(A7) |
| H(A7) | 0: , 1: H(A1), 2: , 3: , 4: , 5: , 6: , 7: H(A6), 8: , 9: , a: , b: , c: , d: , e: , f: H(A3), value: |
| H(A1) | prefix: 2, Key-end: 1335, balance: 45.0ETH, nonce: n1 |
| H(A6) | value: prefix: 0, shared nibble(s): d3, next node: H(A5) |
| H(A3) | prefix: 2, Key-end: 9365, balance: 1.1ETH, nonce: n3 |
| H(A5) | 0: , 1: , 2: , 3: H(A2), 4:, 5:, 6:, 7:, 8:, 9: H(A4), a: , b: , c: , d: , e: , f:, value: |
| H(A2) | prefix: 0, Key-end: 7, balance: 1.00WEI, nonce: n2 |
| H(A4) | prefix: 0, Key-end: 7, balance: 0.12ETH, nonce: n4, codehash: c1, storage root: H(A10) |
| H(A10) | 0: , 1: , 2: , 3: H(A11), 4: , 5: , 6: , 7: H(A12), 8: , 9: , a: , b: , c: , d: , e: , f: H(A13), value: |
| H(A11) | prefix: 2, Key-end: 35b2e4, value: Zhang San_A = 20 |
| H(A12) | prefix: 2, Key-end: c25988, value: Li Si_B = 50 |
| H(A13) | prefix: 1, shared nibble(s): a, next node: H(A14) |
| H(A14) | 0: , 1: , 2: , 3: , 4: , 5: , 6: H(A15), 7:, 8: , 9: H(A16), a: , b: , c: , d: , e: , f:, value: |
| H(A15) | prefix: 2, Key-end: be33, value: storedData=s |
| H(A16) | prefix: 2, Key-end: 9365, value: Wang Wu_A = 35 |

In the foregoing Table 3, H() is used to represent hash calculation. In this way, a hash value of a latter tree node is anchored to a former tree node. Through such a layer-by-layer hash, a root hash of an entire state trie tree is obtained, and the root hash is locked into a state root field of a block header.

An ordinary MPT tree stores specific content (state) in a leaf node. However, by using the foregoing specific structure, when a new state is generated, a new leaf node needs to be inserted into the tree, and a series of changes in a path to the root node are generated accordingly, including complex operations such as splitting and combining of the Branch Node and the Extension Node, and recalculating and updating of a hash value. Similarly, when a state is deleted, existing leaf nodes need to be deleted from the tree, and complex operations such as splitting and combining of the Branch Node and the Extension Node, and recalculating and updating of a hash value are also generated. When a state changes, in addition to the change of content in the leaf nodes, complex operations such as splitting and combining of the Branch Node and the Extension Node of the root node, and recalculating and updating of a hash value are also affected. In general, the depth of the tree and specific structures of the Branch Node and the Extension Node change greatly as states of leaf nodes change.

A transaction Merkle tree in bitcoin is also similar. When one block is batchd with 4 transactions, leaf nodes of the Merkle tree thereof consists of the four transactions, that is, there are only four leaf nodes thereof, and the depth of the tree is 2 layers. If one block is batchd with 1024 transactions, there are 1024 leaf nodes, and the depth is 11 layers. This is apparently a tree of a larger size.

A SMT (Sparse Merkle Tree, Sparse Merkle Tree) proposed by Libra is also a data structure of a Merkle type, but has its peculiarity, and is different from an ordinary Merkle tree in some aspects. A most important difference lies in that the number of leaf nodes and the depth and shape of the tree are fixed in advance. For the transactions Merkle tree in bitcoin and the MPT tree in Ethereum, depths, scales, and the like of the trees are changing, that is, dynamic and unfixed. The SMT stores a predetermined quantity of states whose quantity does not change, and a tree of a fixed size is used to store the states. For example, an address length of accounts in Ethereum is 20 bytes, and there are a total of 2¹⁶⁰ different addresses, that is, 2¹⁶⁰ accounts. Actually, an account in Ethereum may be stored by using the SMT (although it does not do so). However, the SMT probably does not include 2¹⁶⁰ accounts, but accounts whose quantity may be apparently less than this quantity. Therefore, an account that is vacant may be filled with a preset value (such as blank), to indicate that the account is a blank account that is not enabled. In a bottom-layer database, no blank (being a preset value) leaf nodes may be stored, but only non-blank leaf nodes are stored.

An advantage of using the SMT is that a size of a Merkle path can be compressed many times. For example, the preset value is represented by using 1 bit, which is much smaller than that of using a complete hash value (for example, a length of a hash value in hash256 is 256 bits). Therefore, a size of an SPV proof is greatly reduced.

S230: The prover verifies the first transaction root and verifies the first pre-state root based on the SPV proof of the batched transaction read set; and executes the batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of the mainnet by using a second mainnet transaction.

That the prover verifies the first transaction root is similar to the foregoing S130, and details are not described again.

That the prover verifies the first pre-state root based on the SPV proof specifically includes: The prover calculates a Merkle root based on the read set of the SPV proof and the Merkle path, to obtain a second pre-state root, and verifies whether the second pre-state root is equal to the first pre-state root. If yes, it indicates that the first pre-state root sent from the prover is correct. Characteristic of Hash calculation: A slight change in a value in each calculation causes a great difference in a final result. Based on this characteristic, the prover cannot commit a fraud, that is, cannot generate a correct result, that is, cannot generate a correct Merkle root based on providing a state of an incorrect leaf node or providing a hash value of an incorrect Merkle tree node. Specifically, the prover may calculate a hash value of content corresponding to a node 8 at the lower left corner in FIG. 6 as a value of the node 8, and calculate a hash value of content corresponding to a node 9 as a value of the node 9; splice the two hash values of the node 8 and the node 9, for example, sequentially, and then calculate a hash value again by using a same hash algorithm, to serve as a hash value of the node 4; splice the two hash values of the node 4 and the node 5 in the SPV proof, for example, sequentially, and then calculate a hash value again by using a same hash algorithm, to serve as a hash value of the node 2; splice the two hash values of the node 2 and the node 3, for example, sequentially, and then calculate a hash value again by using a same hash algorithm, to serve as a hash value of the node 1, that is, serve as the second pre-state root, thereby verifying whether the second pre-state root is equal to the first pre-state root.

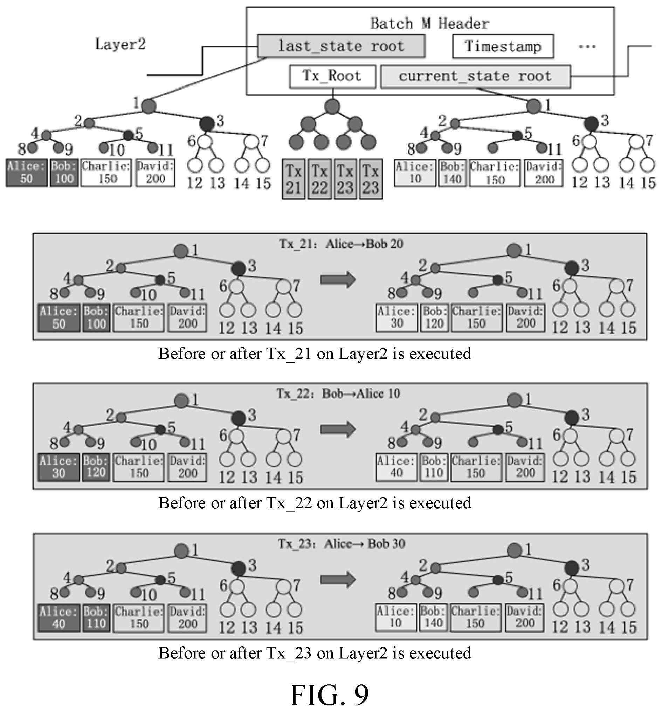

That the prover sequentially executes the batched transactions and generates the second post-state root may be that the prover sequentially executes the batched transactions based on the read set involved in the batched transactions, updates the write set during execution, and recalculates the Merkle root according to the updated write set based on the SPV proof, to generate the second post-state root. Specifically, as shown in FIG. 9, it is assumed that one processed Batch includes 3 transactions, which are respectively:
Tx_21: Alice → Bob 20
Tx_22: Bob → Alice 10
Tx_23: Alice → Bob 20

States involved in transactions in the Batch are Alice and Bob. Therefore, a read set involved in the Batch may include two accounts: Alice and Bob. An SPV proof of a read set may further include a hash value of a node 5 and a hash value of a node 3 in a Merkle tree in addition to two read sets: Alice: 50 and Bob: 100. In this way, the prover sequentially executes all transactions in the Batch based on the read sets of the Batch, that is, based on Alice: 50 and Bob: 100.

For example, read/write sets generated after Tx_21, Tx_22, and Tx_23 are sequentially executed include the following:
If read sets obtained before Tx_21 is executed include Alice: 50 and Bob: 100, and after Tx_21 is executed, an account balance of Alice is changed to 30, and an account balance of Bob is changed to 120, generated write sets are Alice: 30 and Bob: 120.
If read sets obtained before Tx_22 is executed include Alice: 30 and Bob: 120, and after Tx_22 is executed, an account balance of Alice is changed to 40, and an account balance of Bob is changed to 110, generated write sets are Alice: 40 and Bob: 110.
If read sets obtained before Tx_23 is executed include Alice: 40 and Bob: 110, and after Tx_23 is executed, an account balance of Alice is changed to 20, and an account balance of Bob is changed to 130, generated write sets are Alice: 20 and Bob: 130.

After the transactions in the Batch are sequentially executed, generated final states of the Batch are two write sets: Alice: 20 and Bob: 130. The prover may obtain, with reference to the hash value of the node 5 and the hash value of the node 3 of the Merkle tree where the write sets are located, a hash value of a root node of the Merkle tree where the updated states are located, that is, a second post-state root. Herein, for example, the generated write sets are still content corresponding to the 8th node and the 9th node in the Merkle tree, for example, a state corresponding to the node 8, where the balance of Alice is changed to 20 relative to 50 in the initial state, and a state corresponding to the node 9, where the balance of Bob is changed to 130 relative to 100 in the initial state. The prover may recalculate a hash value of the leaf node 8 based on Alice: 20 and recalculate a hash value of the leaf node 9 based on Bob: 130, to generate new hash values. Then, similarly, based on the generated write sets, the prover may calculate a hash value of a Merkle root with reference to a Merkle path (that is, hash values of two red nodes 3 and 5) in the SPV proof, so as to use the hash value as a second post-state root.

Specifically, the prover may calculate a hash value of write set content corresponding to a node 8 as a value of the node 8, and calculate a hash value of write set content corresponding to a node 9 as a value of the node 9; splice the two hash values of the node 8 and the node 9, for example, sequentially, and then calculate a hash value again by using a same hash algorithm, to serve as a hash value of the node 4; splice the two hash values of the node 4 and the node 5 in the SPV proof, for example, sequentially, and then calculate a hash value again by using a same hash algorithm, to serve as a hash value of the node 2; splice the two hash values of the node 2 and the node 3, for example, sequentially, and then calculate a hash value again by using a same hash algorithm, to serve as a hash value of the node 1, that is, serve as the second post-state root, thereby verifying whether the second post-state root is equal to the first post-state root.

Then, the prover may verify whether the second post-state root is equal to the first post-state root. If yes, it indicates that an execution process of the Sequencer is correct because starting from a same initial state, an execution result of sequentially executing the batched transactions by the Sequencer is the same as an execution result of independently sequentially executing the same batched transactions by the prover.

In this way, the prover verifies that a signature may be put to the information of the batched transactions. Specifically, the prover verifies that a signature may be put to at least one of a Batch number of the batched transactions, a transaction root of the batched transactions, and a Post State Root corresponding to the batched transactions. A signature is put to at least one piece of the content, indicating that the prover accepts a result generated by executing this Batch by the Sequencer.

As described above, the prover may be implemented by using a TEE. The TEE has a trusted execution environment completely isolated from the outside, and therefore can hold the secret key in a confidential manner. In this way, after verifying that the foregoing second post-state root is equal to the first post-state root, the prover may put a signature to the information of the batched transactions by using the secret key of the prover, to indicate approval of content of the signature.

The prover may be implemented by using a TEE. The TEE has a trusted execution environment completely isolated from the outside, and therefore can hold the secret key in a confidential manner. In this way, after verifying that the foregoing second post-state root is equal to the first post-state root, the prover may put a signature to the information of the batched transactions by using the secret key of the prover, to indicate approval of content of the signature.

Before the prover signs the information of the batched transactions in S230, the transaction initiator on Layer2 may be used as the challenger to initiate a challenge to the TEE in the prover. If the challenge succeeds, the transaction initiator may confirm that the TEE in the prover is valid and code/data loaded in the prover is trusted. Therefore, the transaction initiator on Layer2 may trust the TEE in the prover.

In addition, after the prover signs the information of the batched transactions in S230, another verifier may also be used as a challenger to initiate a challenge to the TEE in the prover, which is similar to the foregoing process, and details are not described again. In addition, the TEE may hash inputted code/data and then put a signature, so as to guarantee, by using its own credibility, that an input of the execution is also trusted; and the TEE may also sign a hash value of an output (that is, an execution result), and guarantee, by using its own credibility, that an input of the execution is also trusted.

In this way, after verifying that the batched transactions are independently executed (or referred to as replayed) sequentially based on the initial states, the prover signs information of the batched transactions, that is, guarantees, by using the credibility of the prover, that an output result is trusted. Then, the prover may use the signature as a proof and send the proof to the blockchain ledger of the mainnet through the second mainnet transaction. A doubt raised by any person about the signature may be verified by initiating a challenge to the TEE in the prover. If the verification succeeds, it may be determined, based on the trust in the TEE, that the transaction information signed by the TEE is trusted.

Signature verification is a process of verifying a signature by using the public key of the TEE. As long as it is ensured that the public key is trusted, the verification is also trusted and fast. That the prover may use the signature as a proof and send the proof to a blockchain ledger of the mainnet through the second mainnet transaction includes that the prover uses the signature as a proof and sends the proof to the mainnet through the second mainnet transaction, and calls a rollup contract on the mainnet; and the rollup contract verifies, after receiving the transaction, correctness of the signature by using verification logic in the contract.

In conclusion, the prover may send the certificate to the blockchain ledger of the mainnet through the second mainnet transaction. In a typical manner, the prover may send a certificate and a signature of the prover together to the blockchain ledger of the mainnet through the second mainnet transaction. When the foregoing EPID solution is used, the certificate includes the remote attestation report generated by the IAS for the prover. In this way, a verifier may determine, by verifying the certificate, that the signature of the prover to the transaction information is valid. When the foregoing DCAP solution is used, the certificate may include a certificate issued by an attestation service to the prover. If the trust is based on trust in the attestation service, the trust may be extended to the certificate issued by the attestation service to the prover, so that the verifier may verify a signature of the prover by using a public key in the certificate. If higher-level trust is required, in addition to a certificate issued by the attestation service to the prover, a remote attestation report generated by the IAS for the attestation service may further need to be included. In this way, it may be ensured by using authoritative attestation of Intel (that is, the remote attestation report, equivalent to a certificate issued by the Intel to the attestation service) that a signature of the attestation service is trusted. In addition to the certificate issued by the attestation service to the prover, the trust may be conducted downward, thereby ensuring that the signature of the prover is trusted. That is, the SGX DCAP provides trust in a certificate chain manner.

Verification logic executed by the foregoing verifier may be built in a Rollup Contract contract, and may be externally provided in a form of a contract interface, such as a verification interface. In this way, that the prover uses the signature as a proof and sends the proof to the mainnet through the second mainnet transaction and specifically a blockchain ledger may be called in the transaction includes that the prover uses the signature as a proof and sends the proof to the mainnet through the second mainnet transaction, and calls a verification interface of the Rollup Contract contract on the mainnet. The signature may be imported through the interface. In this way, verification logic may be executed inside the verification interface, specifically including verifying validity of the signature. A process of verifying the validity of the signature mainly includes verifying the validity of the signature by using the public key of the prover.

In addition, the certificate of the prover corresponding to the signature may be imported together by using the verification interface and the second mainnet transaction, and the certificate may include the public key of the prover. In this way, in addition to verifying validity of a signature by using the public key of the prover, verifying validity of a certificate of the prover may be further included. The certificate, as described above, may include the remote attestation report generated by the IAS for the prover, or include a certificate issued by the attestation service for the prover (or may include the remote attestation report generated by the IAS for the attestation service). Correspondingly, verifying the certificate may include verifying the validity of the certificate of the prover by using an authoritative public key of Intel, or may include verifying the validity of the certificate of the attestation service by using an authoritative public key of Intel, and verifying the validity of the certificate of the prover by using a public key in the certificate of the attestation service.

As described above, the TEE is used as the prover on the layer 2 network. Because the speed of replaying the transaction and performing verification in the TEE is close to the speed of native execution, a lower delay may be brought. Once the remote attestation succeeds in the local TEE, the CPU can process data in the Enclave by using a TEE mechanism, with extremely high operation efficiency, thereby considering both the data security and the calculation efficiency. This is much faster than the ZK-Rollup manner. For example, in the same case, an interval of time (Block N to Block N+412 in FIG. 4) of an order of 30 to 50 minutes (or referred to as hour) required by ZK-Rollup to generate a proof is shortened to an interval of time (Block N to Block N+62 in FIG. 6) of an order of 5 to 10 minutes in this application (which may be referred to as TEE-Rollup). When the monitoring mode is not used, but S230 is directly performed after S220, the time is even shortened to a smaller extent. In addition, the generated proof is a signature, which is approximately tens of bytes in size, and is similar to ZK-Rollup.

Similar to the foregoing description, the signing information of the batched transactions may be putting a signature to at least one of a Batch number of the batched transactions, a transaction root of the batched transactions, and a post-state root corresponding to the batched transactions.

The signing information of the batched transactions may be putting a signature to at least one of numbers of several batchd successive batches, a transaction root of the batched transactions, and a post-state root corresponding to the batched transactions; or putting a signature to at least one of a Batch number in each group after several batchd successive batches are grouped, a transaction root of the batched transactions, and a post-state root corresponding to the batched transactions.

Before the prover verifies the first transaction root and the first pre-state root, the method may further include: The sequencer sends a first mainnet transaction of calling a rollup contract to a mainnet, where the first mainnet transaction includes fields in a Batch Header of the batched transactions, and a compressed transaction or a compressed read/write set (which is referred to as a term of State Diff); and
then the prover may listen to an execution result of contract execution on the mainnet. Details are similar to those of the foregoing embodiment, and are not described herein again.

In addition, the prover may further send the certificate and the signature together to the blockchain ledger of the mainnet through the second mainnet transaction. The certificate may include the remote attestation report generated by the IAS for the prover, or include the certificate, include a certificate issued by the attestation service for the prover, or further include the remote attestation report generated by the IAS for the attestation service).

That the prover uses the signature as a proof and sends the proof to a blockchain ledger of the mainnet through the second mainnet transaction includes that the prover uses the signature as a proof and sends the proof to the mainnet through the second mainnet transaction, and calls a rollup contract on the mainnet; and may further include that the rollup contract verifies, after receiving the transaction, correctness of the signature by using verification logic in the contract. That the rollup contract verifies, after receiving the transaction, correctness of the signature by using verification logic in the contract may further include: verifying validity of the certificate, where the certificate includes the public key of the prover.

The verifying validity of the certificate may specifically include:
verifying validity of the certificate of the prover by using an authoritative public key of Intel; or
verifying the validity of the certificate of the attestation service by using an authoritative public key of Intel, and verifying the validity of the certificate of the prover by using a public key in the certificate of the attestation service.

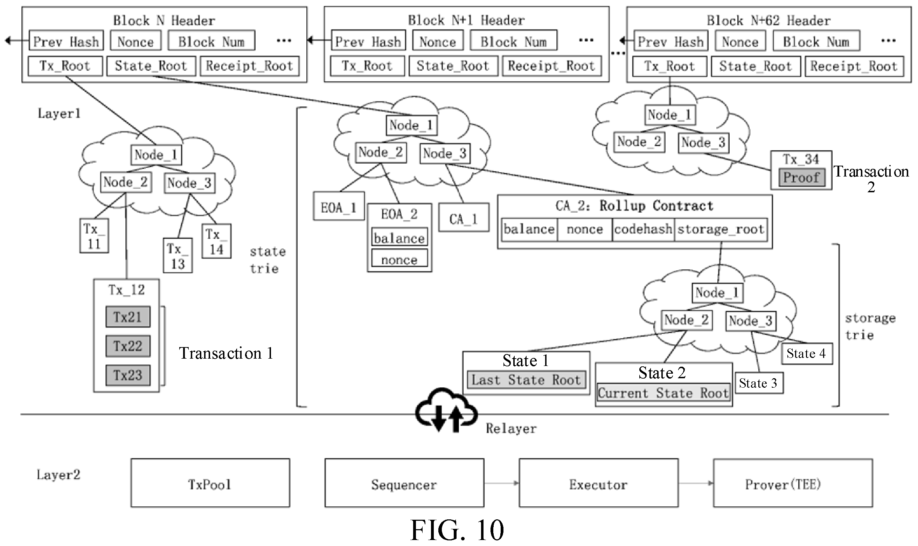

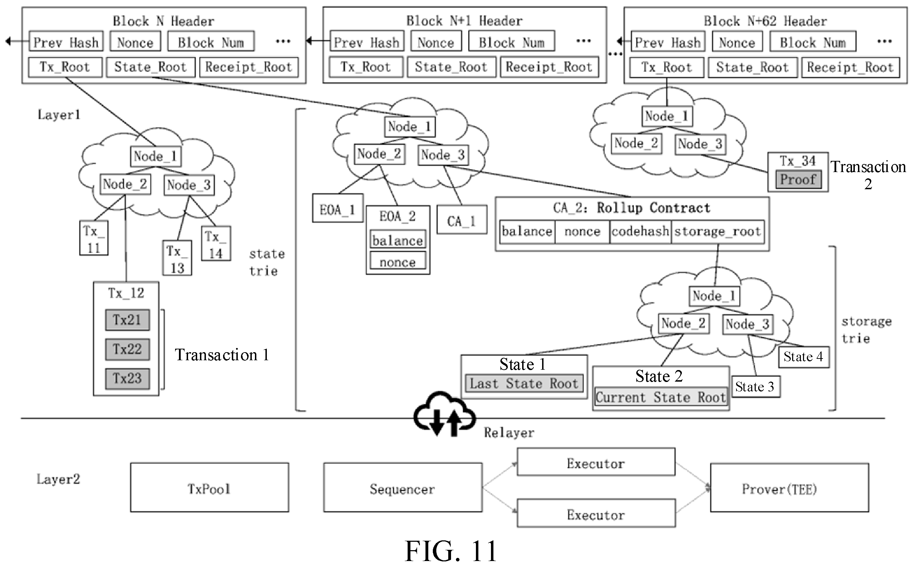

To improve the TPS in Layer2, a transaction execution speed needs to be increased. Therefore, a transaction execution speed may be increased in a parallel computing manner. Parallel computing is relative to serial computing, and is an algorithm that can execute a plurality of instructions at a time, to increase a computing speed and solve a large and complex computing problem by increasing a problem solving scale. The parallel computing may be divided into temporal parallelism and spatial parallelism. The temporal parallelism refers to a pipelining technology, and the spatial parallelism refers to calculation concurrently performed by using a plurality of processors. In addition, to improve efficiency, generally, a grouped execution manner or a pipelining manner may be used for an execution process to improve efficiency. When the Prover has high performance, and an overall performance bottleneck lies in a transaction execution process of the Sequencer, a part that executes a transaction and that is in the Sequencer may be decoupled, for example, the Executor is decoupled, as shown in FIG. 10. In this way, the foregoing pipelining manner may be used to increase an overall execution speed. In addition, horizontal scaling (horizontal scaling, also referred to as scaling out) may be performed on the Executor, that is, the Executor is scaled into a plurality of entities (logical entities or physical entities), as shown in FIG. 11. In this way, the foregoing grouped execution manner may be used, thereby increasing an execution speed of an execution link, and further improving utilization of the Prover.

The following first provides an embodiment of a method for implementing rollup of a layer 2 network in a pipelining manner by using FIG. 10 as an example. The method includes:
S310: A sequencer of the layer 2 network pulls transactions from a transaction pool, sorts and batchs the pulled transactions, and then sends the batched transactions to an executor.

Subsequently, the executor and a prover perform S320 and S330 in parallel:
S320: The executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, the initial states obtained before the post-order batched transactions are executed, and a first pre-state root and the first post-state root that correspond to the initial states, where the prover is implemented by using a trusted execution environment.

The post-order batched transactions are batch transactions whose sequence numbers are later than those of the pre-order batched transactions in S330. For example, if a sequence number of a post-order batched transaction is N+1, S320 specifically includes: generating, by the executor, a first transaction root of transactions in an (N+1)^{th} batch, sequentially executing the transactions in the (N+1)^{th} batch based on initial states obtained before the transactions in the (N+1)^{th} batch are executed, and generating a first post-state root; and sending, by the executor, to a prover of the layer 2 network, the transactions in the (N+1)^{th} batch, the first transaction root, the initial states obtained before the transactions in the (N+1)^{th} batch are executed, and a first pre-state root and the first post-state root that correspond to the initial states, where the prover is implemented by using a trusted execution environment.

S330: The prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

Correspondingly, the pre-order batched transactions are batchs whose sequence numbers are earlier than those of the post-order batched transactions in S320. For example, if a sequence number of a pre-order batched transaction is N, S330 specifically includes: verifying, by the prover, the first transaction root in an N^{th} batch and the first pre-state root; and executing transactions in the N^{th} batch sequentially based on the initial states after the first transaction root and the first pre-state root are verified successfully, generating a second post-state root, signing information of the transactions in the N^{th} batch by using a secret key in the trusted execution environment after verifying that the second post-state root is equal to the first post-state root, using the signature as a proof, and sending the proof to a blockchain ledger of a mainnet by using a second mainnet transaction.

A pre-order batched transaction and a subsequent batched transaction are not limited to a relationship between N and N+1, and may be, for example, a relationship between N and N+2.

In this way, the executor may continuously perform corresponding work of post-order batched transactions, and send a result to the prover, and the prover may continuously perform corresponding work of pre-order batched transactions, to form pipelined work. Therefore, computing power of the executor and the prover can be efficiently used, and continuous transaction execution and continuous proof generation can be implemented.

When the SPV proof is used, the foregoing solution is as follows:
S410: A sequencer of the layer 2 network pulls transactions from a transaction pool, sorts and batchs the pulled transactions, and then sends the batched transactions to an executor.

Subsequently, the executor and a prover may perform S420 and S430 in parallel:
S420: The executor generates a first transaction root of post-order batched transactions, sequentially executes the post-order batched transactions based on initial states obtained before the batched transactions are executed, and generates a first post-state root; and the executor sends, to the prover of the layer 2 network, the post-order batched transactions, the first transaction root, an SPV proof of a read set obtained before the post-order batched transactions are executed, a first pre-state root, and the first post-state root, where the prover is implemented by using a trusted execution environment.
S430: The prover verifies a first transaction root of pre-order batched transactions and verifies the first pre-state root based on an SPV proof of a pre-order batched transaction read set; and executes the pre-order batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of a mainnet by using a second mainnet transaction.

The following provides an embodiment of a method for implementing rollup of a layer 2 network in a grouping parallelism manner by using FIG. 11 as an example. The method includes:
S510: A sequencer of the layer 2 network pulls transactions from a transaction pool, sorts and batchs the pulled transactions, then groups transactions that do not have a dependency relationship, and sends different groups an executor participant.

At least two executors are at least two executor threads/coroutines, at least two executor processes, or the like. The at least two executors are at least two executor threads/coroutines, and may be located in a same process. Alternatively, the at least two executors are at least two executor processes, and may be located on a same physical machine/virtual machine or different physical machines/virtual machines. When the at least two executor processes are located on different physical machines/virtual machines, these different physical machines/virtual machines may be physical machines/virtual machines of a same participant. In this way, there is no trust problem between physical machines/virtual machines of a same participant.

For example, the sequencer sorts and batchs the pulled transactions, and then groups the batched transactions. For an ordinary transfer transaction, a plurality of transactions may be divided into a plurality of transaction groups according to accounts accessed by the transactions, and a same account is not accessed between the transaction groups, so that the transaction groups can be executed in parallel. When a transaction involves calling an smart contract, in some simple cases, static analysis may be performed on code of the smart contract, to obtain a state variable of access (including read/write). In addition, for some complex cases, a state variable of access in the transaction cannot be learned in advance before the transaction is executed, so that a plurality of transactions cannot be effectively grouped, and the transactions cannot be executed in parallel. For the latter, a plurality of transactions may be pre-executed, to obtain a pre-execution read-write set of each transaction, so that these transactions may be grouped according to the pre-execution read-write sets. Certainly, an ordinary transfer transaction may also be pre-executed to obtain a read-write set.

Specifically, a pre-execution read-write set of a transaction includes, for example, a pre-execution read set and a pre-execution write set. The pre-execution read set includes a key-value pair of a variable read by the transaction during pre-execution, and the pre-execution write set includes a key-value pair of a variable written by the transaction during pre-execution. The state variable includes, for example, an externally owned account in Layer2, or a state variable defined for a contract account.

A plurality of transactions may be grouped by using different algorithms. In an implementation, a plurality of transactions may be grouped by using a directed acyclic graph (Directed Acyclic Graph, DAG) algorithm. Specifically, first, a DAG graph between a plurality of transactions is drawn according to a dependency relationship between the transactions. For example, it is assumed that a slave node executes a plurality of transactions according to an order in which a master node pre-executes the plurality of transactions. Therefore, a dependency relationship between the transactions may be determined according to pre-execution read-write sets and a pre-execution order of the plurality of transactions. If a pre-execution read set of one transaction and a pre-execution write set of the other transaction include a same Key, or a write set of one transaction and a write set of the other transaction include a same Key, a transaction in the two transactions that is to be pre-executed later (for example, a transaction Tx2) needs to depend on a transaction that is to be pre-executed earlier (for example, a transaction Tx1). Therefore, it may be drawn in the DAG graph that the transaction Tx1 points to the transaction Tx2. When the transaction Tx2 depends on execution of the transaction Tx1, it may be considered that the transaction Tx1 and the transaction Tx2 are conflicting transactions, and need to be executed serially, that is, the transaction Tx2 is executed after the transaction Tx1 is executed.

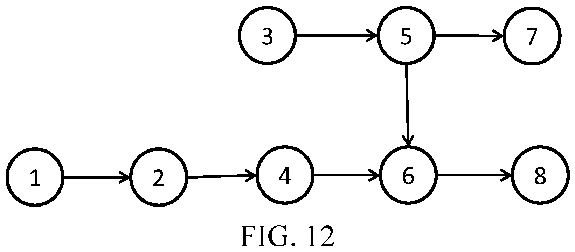

FIG. 12 is a schematic diagram of a DAG graph of a plurality of transactions according to an embodiment. A circle in the figure represents a node in the DAG graph, a number in the circle represents a transaction number, and an arrow between nodes represents a directed connection edge between the nodes. After the DAG graph of the plurality of transactions is obtained, the plurality of transactions may be grouped according to the DAG graph, so that transactions in every two transaction groups are disconnected nodes in the DAG graph, that is, there is no connection edge between any transaction in one transaction group and each transaction in the other transaction group.

As shown in FIG. 12, a plurality of transactions (that is, transactions Tx1 to Tx8) connected by using arrows are conflicting transactions, and need to be placed in one transaction group. When the transactions Tx1 to Tx8 are executed, transactions (Tx3, Tx5) and (Tx1, Tx2, and Tx4) may be first executed in parallel. The transactions Tx3 and Tx5 are executed in series, and the transactions Tx1, Tx2, and Tx4 need to be executed in series. The transaction Tx6 needs to be executed after the transaction Tx4 and the transaction Tx5 are both executed. The Transaction Tx7 and the transaction Tx8 can be executed in parallel only after the transaction Tx5 and the transaction Tx6 are both executed. The transaction Tx5 and the transaction Tx6 are connected to more than three nodes and may also be referred to as a fork point. When there are many fork points in the DAG graph, a waiting time of a subsequent transaction for the fork points is long. In addition, the DAG algorithm needs a lot of state space. Therefore, when there are many conflicting transactions between a plurality of transactions, efficiency of using the DAG grouping algorithm is reduced.

In another implementation, a plurality of transactions may be grouped by using a union-find algorithm. Union-find is a tree-type data structure, and is used for handling problems of combination and query of some disjoint sets (disjoint sets). Union-find usually includes two operations: find (Find), used to query whether two elements are in a same set; and union (Union), used to combine two disjoint sets into one set. By using the algorithm, when pre-execution read-write sets of two transactions include a same Key, the two transactions can be combined into a same set, thereby obtaining a plurality of sets. Transactions in every two sets do not access a same Key, so that a plurality of sets can be processed in parallel. However, because the union-find algorithm does not consider whether access of a transaction to a Key is read or write, as long as two transactions access a same Key, the two transactions are placed in one group. Therefore, two transactions reading a same key may be placed in a same group. Therefore, compared with a grouping result obtained by the DAG algorithm, a degree of parallelism of a plurality of transaction groups obtained by performing grouping through the union-find algorithm is low.

The executor participant may include a plurality of executors. The sequencer may further read a value in a read set of each transaction set of the group that is stored, and send the read value to a corresponding executor.

S520: The executor participant generates a first transaction root of the batched transactions by using one executor; at least two executors sequentially execute different transaction groups in the batched transactions respectively based on initial states obtained before the batched transactions are executed, and one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, where the prover is implemented by using a trusted execution environment.

One Sequencer may be connected to a plurality of executors of one participant, and as shown in FIG. 11, is connected to two executors of one participant. The participant may generate a first transaction root of the batched transactions by using one executor. In addition, the participant may sequentially execute different transaction groups in the batched transactions by using the at least two executors respectively. The "one Executor" herein may be one or not one of two Executors.

After the at least two executors sequentially execute different transaction groups in the batched transactions respectively, execution results may be sent to "one executor", so that the "one executor" combines the execution results of all the transaction groups and generates the first post-state root. Then, the executor participant may send, to a prover of the layer 2 network, the batched transactions, the first transaction root, the initial states obtained before the transactions are executed, and a first pre-state root and the first post-state root that correspond to the initial states. Herein, the "one executor" may be one or not one of "the at least two executors".

S530: The prover verifies a first transaction root of batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

In this way, the executor may continuously perform corresponding work of a next batched transaction, and send a result to the prover, and the prover may continuously perform corresponding work of a previous batched transaction. Therefore, computing power of the prover can be efficiently used, and continuous and rapid proof generation can be implemented.

In addition, the batched transactions may be grouped by an executor of the participant, rather than by a sequencer. An embodiment of this case is as follows:
S610: A sequencer of the layer 2 network pulls transactions from a transaction pool, sorts and batchs the pulled transactions, and then sends the batched transactions to an executor participant.
S620: The executor participant generates a first transaction root of the batched transactions by using one executor, groups transactions that do not have a dependency relationship, and then sends different groups to at least two executors; at least two executors sequentially execute different transaction groups in the batched transactions respectively based on initial states obtained before the batched transactions are executed, and one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, where the prover is implemented by using a trusted execution environment.
S630: The prover verifies a first transaction root of batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

The following provides an embodiment of a method for implementing rollup of a layer 2 network in a grouping parallelism + pipelining manner. The method includes:
S710: A sequencer of the layer 2 network pulls transactions from a transaction pool, sorts and batchs the pulled transactions, then groups transactions that do not have a dependency relationship, and sends different groups an executor participant.
S720 and S730 are performed in parallel:
   S720: The executor participant generates a first transaction root of post-order batched transactions by using one executor; at least two executors sequentially execute different transaction groups in the post-order batched transactions respectively based on initial states obtained before the post-order batched transactions are executed, and the one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment.

Details may be as follows: The executor participant generates a first transaction root of an (N+1)^{th} batched transaction by using one executor; at least two executors sequentially execute different transaction groups in the (N+1)^{th} batched transaction respectively based on initial states obtained before the (N+1)^{th} batched transaction is executed, and the one executor combines execution results of all the transaction groups and generates a first post-state root; and the executor participant sends, to a prover of the layer 2 network, the (N+1)^{th} batched transaction, the first transaction root, the initial states obtained before the transaction is executed, and a first pre-state root and the first post-state root that correspond to the initial states, where the prover is implemented by using a trusted execution environment.

S730: The prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

Details may be as follows: The prover verifies the first transaction root in an N^{th} batched transaction and the first pre-state root; and executes the N^{th} batched transaction sequentially based on the initial states after the first transaction root and the first pre-state root are verified successfully, generates a second post-state root, signs information of transactions in the N^{th} batch by using a secret key in the trusted execution environment after verifying that the second post-state root is equal to the first post-state root, uses the signature as a proof, and sends the proof to a blockchain ledger of a mainnet by using a second mainnet transaction.

In the foregoing example, the batched transactions may be grouped by an executor of the participant instead of by a sequencer. Then, an embodiment of this case is as follows:
S810: A sequencer of the layer 2 network pulls transactions from a transaction pool, sorts and batchs the pulled transactions, and then sends the batched transactions to an executor participant.
S820 and S830 are performed in parallel:
   S820: The executor participant generates a first transaction root of the post-order batched transactions by using one executor, groups transactions that do not have a dependency relationship, and then sends different groups to at least two executors; at least two executors sequentially execute different transaction groups in the batched transactions respectively based on initial states obtained before the post-order batched transactions are executed, and one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment.

Specifically, the executor participant generates a first transaction root of an (N+1)^{th} batched transaction by using one executor, groups transactions that do not have a dependency relationship, and then sends different groups to at least two executors; at least two executors sequentially execute different transaction groups in the batched transactions respectively based on an initial state obtained before the (N+1)^{th} batched transaction is executed, and one executor combines execution results of all the transaction groups and generates a first post-state root; and the executor participant sends, to a prover of the layer 2 network, the (N+1)^{th} batched transaction, the first transaction root, the initial states obtained before the transaction is executed, and a first pre-state root and the first post-state root that correspond to the initial states, where the prover is implemented by using a trusted execution environment.

S830: The prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

Specifically, the prover verifies the first transaction root in an N^{th} batched transaction and the first pre-state root; and executes the N^{th} batched transaction sequentially based on the initial states after the first transaction root and the first pre-state root are verified successfully, generates a second post-state root, signs information of transactions in the N^{th} batch by using a secret key in the trusted execution environment after verifying that the second post-state root is equal to the first post-state root, uses the signature as a proof, and sends the proof to a blockchain ledger of a mainnet by using a second mainnet transaction.

In the foregoing embodiments, when overall performance of the executor is high, an overall performance bottleneck may lie in a verification process of the Prover TEE. In this case, a plurality of Prover TEEs may be provided through extension, thereby executing the foregoing process in parallel. Apparently, parallel execution by the plurality of Prover TEEs may increase a speed of attestation on Layer1, thereby further reducing a delay of transaction confirmation on Layer1.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, generate a first transaction root of the batched transactions, execute the batched transactions sequentially based on initial states obtained before the batched transactions are executed, and generate a first post-state root; and the sequencer is configured to send, to a prover of the layer 2 network, the batched transactions, the first transaction root, an SPV proof of a batched transaction read set obtained before the batched transactions are executed, and a first pre-state root and the first post-state root that correspond to the initial states; and
the prover is configured to verify the first transaction root and verify the first pre-state root based on the SPV proof of the batched transaction read set; execute the batched transactions sequentially after the first transaction root and the first pre-state root are verified successfully, and generate a second post-state root; and put a signature to information of the batched transactions by using a secret key in a trusted execution environment after verifying that the second post-state root is equal to the first post-state root, use the signature as a proof, and send the proof to a blockchain ledger of the mainnet by using a second mainnet transaction.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor, where
the executor and a prover perform S320 and S330 in parallel:
   S320: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, the initial states obtained before the post-order batched transactions are executed, and a first pre-state root and the first post-state root that correspond to the initial states, where the prover is implemented by using a trusted execution environment; and
   S330: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor, where
the executor and a prover perform S420 and S430 in parallel:
   S420: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, an SPV proof of a read set obtained before transactions in an (N+1)^{th} batch are executed, a first pre-state root, and the first post-state root, where the prover is implemented by using a trusted execution environment; and
   S430: the prover verifies a first transaction root of pre-order batched transactions and verifies the first pre-state root based on an SPV proof of a pre-order batched transaction read set; and executes the pre-order batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of a mainnet by using a second mainnet transaction.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, then group transactions that do not have a dependency relationship, and send different groups an executor participant;
the executor participant generates a first transaction root of the batched transactions by using one executor; at least two executors sequentially execute different transaction groups in the batched transactions respectively based on initial states obtained before the batched transactions are executed, and the one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, where the prover is implemented by using a trusted execution environment; and
the prover verifies the first transaction root of the batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor participant;
the executor participant generates a first transaction root of the batched transactions by using one executor, groups transactions that do not have a dependency relationship, and then sends different groups to at least two executors; at least two executors sequentially execute different transaction groups in the batched transactions respectively based on initial states obtained before the batched transactions are executed, and one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, where the prover is implemented by using a trusted execution environment; and
the prover verifies the first transaction root of the batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, then group transactions that do not have a dependency relationship, and send different groups an executor participant;
the executor participant generates a first transaction root of post-order batched transactions by using one executor; at least two executors sequentially execute different transaction groups in the post-order batched transactions respectively based on initial states obtained before the post-order batched transactions are executed, and the one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment; and
the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

The following describes an embodiment of a layer 2 network of this application, including a transaction pool, a sequencer, and a prover, where
the transaction pool is configured to receive a transaction sent by a user on the layer 2 network;
the sequencer is configured to pull transactions from a transaction pool, sort and batch the pulled transactions, and then send the batched transactions to an executor participant;
S820 and S830 are performed in parallel:
   S820: the executor participant generates a first transaction root of the post-order batched transactions by using one executor, groups transactions that do not have a dependency relationship, and then sends different groups to at least two executors; at least two executors sequentially execute different transaction groups in the batched transactions respectively based on initial states obtained before the post-order batched transactions are executed, and one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, where the prover is implemented by using a trusted execution environment; and
   S830: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

In the 1990s, improvements to a technology can be clearly divided into hardware improvements (for example, improvements to circuit structures such as diodes, transistors, and switches) or software improvements (improvements to method procedures). However, with the development of technology, at present, improvements to many method procedures can be considered as direct improvements to hardware circuit structures. Designers almost all program an improved method procedure to a hardware circuit, to obtain a corresponding hardware circuit structure. Therefore, it does not mean that the improvement to a method procedure cannot be achieved using hardware entity modules. For example, a programmable logic device (Programmable Logic Device, PLD) (such as a field programmable gate array (Field Programmable Gate Array, FPGA), is such an integrated circuit whose logic function is determined by a user programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler (logic compiler)" software, which is similar to a software compiler used to write programs. An original code before compiling is also written in a specific programming language, which is referred to as hardware description language (Hardware Description Language, HDL). There are many types of HDL, such as advanced boolean expression language (Advanced Boolean Expression Language, ABEL), altera hardware description language (Altera Hardware Description Language, AHDL), Confluence, cornell university programming language (Cornell University Programming Language, CUPL), HDCal, java hardware description language (Java Hardware Description Language, JHDL), Lava, Lola, MyHDL, PALASM, and ruby hardware description language (Ruby Hardware Description Language, RHDL). Currently, very-high-speed integrated circuit hardware description language (Very-High-Speed Integrated Circuit Hardware Description Language, VHDL) and Verilog are most commonly used. A person skilled in the art should also be aware that it is easy to obtain a hardware circuit that implements the logic method procedures by simply performing some logic programming on the method procedures by using the foregoing hardware description languages and performing programming into an integrated circuit.

The controller can be implemented in any suitable manner. For example, the controller can take the form of, for example, a microprocessor or processor and a computer-readable medium storing computer-readable program code (for example, software or firmware) executable by the processor (microprocessor), a logic gate, a switch, an application specific integrated circuit (Application Specific Integrated Circuit, ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller can also be implemented as a part of control logic of the memory. A person skilled in the art is also aware that in addition to implementing the controller by using pure computer-readable program code, method steps may be logically programmed to enable the controller to implement a same function in a form of a logic gate, a switch, an application-specific integrated circuit, a programmable logic controller, an embedded microcontroller, or the like. Therefore, the controller may be considered as a hardware component, and an apparatus for implementing various functions included in the controller may also be considered as a structure in the hardware component. Alternatively, the apparatus for implementing various functions may be even considered as a software module for implementing the method and a structure in a hardware component.

The system, the apparatus, the module or the unit described in the foregoing embodiments may be specifically implemented by a computer chip or an entity, or implemented by a product having a certain function. A typical implementation device is a server system. Certainly, this application does not preclude that, with the development computer technologies in the future, the computer for implementing the functions in the foregoing embodiments may be, for example, a personal computer, a laptop computer, an in-vehicle man-machine interactive device, a cellular phone, a camera phone, a smartphone, a personal digital assistant, a media player, a navigation device, an email device, a game console, a tablet computer, a wearable device, or a combination of any of the devices.

Although the one or more embodiments of this specification provide method operation steps described in the embodiments or flowcharts, more or fewer operation steps may be included based on conventional means or non-creative means. The order of the steps listed in the embodiment is merely one of a plurality of step execution orders, and does not indicate the only execution order. When an actual apparatus or terminal product is executed, sequential execution or parallel execution may be performed according to the method orders shown in the embodiments or the accompanying drawings (for example, in a parallel processor or multi-thread processing environment, and even a distributed data processing environment). The term "include", "include", or any other variants thereof is intended to cover a non-exclusive inclusion, so that a process, a method, a product, or a device that includes a series of elements not only includes such elements, but also includes other elements not expressly listed, or further includes elements inherent to such a process, method, product, or device. Unless otherwise indicated, other same or equivalent elements are not excluded from existing in the process, the method, the product, or the device that includes the elements. For example, the terms such as "first" and "second" are used to denote names, and do not denote any particular order.

For ease of description, when the foregoing apparatus is described, the apparatus is divided into various modules according to functions for separately description. Certainly, during implementation of one or more modules of this specification, functions of various modules may be implemented in the same piece of or a plurality of pieces of software and/or hardware, or modules implementing the same function may be implemented by using a combination of a plurality of submodules or subunits. The foregoing described apparatus embodiments are merely examples. For example, the unit division is merely logical function division and there may be other division manners in other implementations. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the devices or units may be implemented in electronic, mechanical, or other forms.

The present invention is described with reference to the flowcharts and/or block diagrams of the method, the apparatus (system), and the computer program product according to embodiments of the present invention. It should be understood that computer program instructions may be used for implementing each procedure and/or each block in the flowcharts and/or the block diagrams and a combination of a procedure and/or a block in the flowcharts and/or the block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by a computer or a processor of another programmable data processing device.

These computer program instructions may alternatively be stored in a computer-readable memory that can instruct a computer or another programmable data processing device to work in a specific mode, so that the instructions stored in the computer-readable memory generate an artifact that includes an instruction apparatus. The instruction apparatus implements functions specified in one or more procedures in the flowcharts and/or one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPUs), an input/output interface, a network interface, and a memory.

The memory may include forms such as a non-persistent storage, a random-access memory (RAM), and/or a non-volatile memory in a computer-readable medium, for example, a read-only memory (ROM) or a flash memory (flash RAM). The main memory is an example of the computer-readable medium.

The computer-readable medium includes a non-volatile medium and a volatile medium, a movable medium and a non-movable medium, which may implement storage of information by using any method or technology. The information may be computer-readable instructions, data structures, modules of a program, or other data. Examples of a computer storage medium include but are not limited to a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. According to the definitions in this specification, the computer-readable medium does not include transitory computer-readable media (transitory media), such as a modulated data signal and a modulated carrier.

A person skilled in the art should understand that one or more of embodiments of this specification may be provided as a method, a system, or a computer program product. Therefore, the one or more of embodiments of this specification may use a form of hardware-only embodiments, software-only embodiments, or embodiments with a combination of software and hardware. Moreover, the one or more of embodiments of this specification may use a form of a computer program product that is implemented on one or more computer-usable storage media (including but not limited to a disk memory, a CD-ROM, an optical memory, and the like) that include computer-usable program code.

The one or more of embodiments of this specification can be described in the general context of computer-executable instructions executed by a computer, for example, a program module. Generally, the program module includes a routine, a program, an object, a component, a data structure, or the like that executes a specific task or implements a specific abstract data type. The one or more of embodiments of this specification may also be implemented in a distributed computing environment in which tasks are performed by remote processing devices connected by using a communication network. In a distributed computing environment, the program module may be located in local and remote computer storage media including storage devices.

Embodiments in this specification are all described in a progressive manner, for same or similar parts in embodiments, reference may be made to these embodiments, and each embodiment focuses on a difference from other embodiments. Especially, a system embodiment is basically similar to a method embodiment, and therefore is described briefly. For related parts, reference may be made to partial descriptions in the method embodiment. In the descriptions of this specification, descriptions of a reference term such as "an embodiment", "some embodiments", "an example", "a specific example", or "some examples" means that a feature, structure, material, or characteristic that is described with reference to the embodiment or the example is included in at least one embodiment or example of the embodiments of this specification. In this specification, exemplary descriptions of the foregoing terms does not necessarily refer to a same embodiment or example. Moreover, the specific feature, structure, material, or characteristic described may be combined in any one or more embodiments or examples in a suitable manner. In addition, different embodiments or examples described in this specification, as well as features of different embodiments or examples, may be integrated and combined by a person skilled in the art without contradicting each other.

The foregoing descriptions are merely embodiments of the one or more of embodiments of this specification, and are not intended to limit the one or more of embodiments of this specification. For a person skilled in the art, various modifications and changes may be made to the one or more of embodiments of this specification. Any modification, equivalent replacement, or improvement made without departing from the spirit and principle of this specification shall fall within the scope of the claims.

## Claims

1. A method for implementing rollup of a layer 2 network, comprising:
pulling, by a sequencer of the layer 2 network, transactions from a transaction pool, sorting and batching the pulled transactions, generating a first transaction root of the batched transactions, executing the batched transactions sequentially based on initial states obtained before the batched transactions are executed, and generating a first post-state root;
sending, by the sequencer, to a prover of the layer 2 network, the batched transactions, the first transaction root, an SPV proof of a read set obtained before the batched transactions are executed, a first pre-state root, and the first post-state root, wherein the prover is implemented by using a trusted execution environment; and
verifying, by the prover, the first transaction root and verifying the first pre-state root based on the SPV proof of the batched transaction read set; executing the batched transactions sequentially after the first transaction root and the first pre-state root are verified successfully, and generating a second post-state root; and signing information of the batched transactions by using a secret key in a trusted execution environment after verifying that the second post-state root is equal to the first post-state root, using the signature as a proof, and sending the proof to a blockchain ledger of the mainnet by using a second mainnet transaction.

2. The method according to claim 1, wherein the verifying, by the prover, the first pre-state root based on the SPV proof comprises: calculating, by the prover, a Merkle root based on the read set of the SPV proof and the Merkle path, to obtain a second pre-state root, and verifying whether the second pre-state root is equal to the first pre-state root.

3. The method according to claim 1, wherein the executing the batched transactions sequentially and generating a second post-state root comprises:
sequentially executing the batched transactions based on the batched transaction read set, updating the write set during execution, and recalculating the Merkle root according to the updated write set based on the SPV proof, to generate the second post-state root.

4. A method for implementing rollup of a layer 2 network, comprising:
pulling, by a sequencer of the layer 2 network, transactions from a transaction pool, sorting and batching the pulled transactions, and then sending the batched transactions to an executor, wherein
the executor and a prover perform S1 and S2 in parallel:
S1: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, the initial states obtained before the post-order batched transactions are executed, and a first pre-state root and the first post-state root that correspond to the initial states, wherein the prover is implemented by using a trusted execution environment; and
S2: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

5. A method for implementing rollup of a layer 2 network, comprising:
pulling, by a sequencer of the layer 2 network, transactions from a transaction pool, sorting and batching the pulled transactions, and then sending the batched transactions to an executor, wherein
the executor and a prover perform S3 and S4 in parallel:
S3: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, an SPV proof of a read set obtained before transactions in an (N+1)^{th} batch are executed, a first pre-state root, and the first post-state root, wherein the prover is implemented by using a trusted execution environment; and
S4: the prover verifies a first transaction root of pre-order batched transactions and verifies the first pre-state root based on an SPV proof of a pre-order batched transaction read set; and executes the pre-order batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of a mainnet by using a second mainnet transaction.

6. A method for implementing rollup of a layer 2 network, comprising:
pulling, by a sequencer of the layer 2 network, transactions from a transaction pool, sorting and batching the pulled transactions, then grouping transactions that do not have a dependency relationship, and sending different groups an executor participant;
generating, by the executor participant, a first transaction root of the batched transactions by using one executor; sequentially executing, by at least two executors, different transaction groups in the batched transactions respectively based on initial states obtained before the batched transactions are executed, and combining, by the one executor, execution results of all the transaction groups and generating a first post-state root; and sending, by the executor participant, to a prover of the layer 2 network, the batched transactions, the first transaction root, the initial states obtained before the transactions are executed, and a first pre-state root and the first post-state root that correspond to the initial states, wherein the prover is implemented by using a trusted execution environment; and
verifying, by the prover, the first transaction root of the batched transactions and the first pre-state root; and executing the batched transactions sequentially based on the initial states after the first transaction root and the first pre-state root are verified successfully, generating a second post-state root, signing information of the batched transactions by using a secret key in the trusted execution environment after verifying that the second post-state root is equal to the first post-state root, using the signature as a proof, and sending the proof to a blockchain ledger of a mainnet by using a second mainnet transaction.

7. A method for implementing rollup of a layer 2 network, comprising:
pulling, by a sequencer of the layer 2 network, transactions from a transaction pool, sorting and batching the pulled transactions, and then sending the batched transactions to an executor participant;
generating, by the executor participant, a first transaction root of the batched transactions by using one executor, grouping transactions that do not have a dependency relationship, and then sending different groups to at least two executors; sequentially executing, by at least two executors, different transaction groups in the batched transactions respectively based on initial states obtained before the batched transactions are executed, and combining, by one executor, execution results of all the transaction groups and generating a first post-state root; and sending, by the executor participant, to a prover of the layer 2 network, the batched transactions, the first transaction root, the initial states obtained before the transactions are executed, and a first pre-state root and the first post-state root that correspond to the initial states, wherein the prover is implemented by using a trusted execution environment; and
verifying, by the prover, the first transaction root of the batched transactions and the first pre-state root; and executing the batched transactions sequentially based on the initial states after the first transaction root and the first pre-state root are verified successfully, generating a second post-state root, signing information of the batched transactions by using a secret key in the trusted execution environment after verifying that the second post-state root is equal to the first post-state root, using the signature as a proof, and sending the proof to a blockchain ledger of a mainnet by using a second mainnet transaction.

8. A method for implementing rollup of a layer 2 network, comprising:
pulling, by a sequencer of the layer 2 network, transactions from a transaction pool, sorting and batching the pulled transactions, then grouping transactions that do not have a dependency relationship, and sending different groups an executor participant;
generating, by the executor participant, a first transaction root of post-order batched transactions by using one executor; sequentially executing, by at least two executors, different transaction groups in the post-order batched transactions respectively based on initial states obtained before the post-order batched transactions are executed, and combining, by the one executor, execution results of all the transaction groups and generating a first post-state root; and sending, by the executor participant, to a prover of the layer 2 network, the post-order batched transactions, the first transaction root, the initial states obtained before the transactions are executed, and a first pre-state root and the first post-state root that correspond to the initial states, wherein the prover is implemented by using a trusted execution environment; and
verifying, by the prover, a first transaction root of pre-order batched transactions and the first pre-state root; and executing the pre-order batched transactions sequentially based on the initial states after the first transaction root and the first pre-state root are verified successfully, generating a second post-state root, signing information of the pre-order batched transactions by using a secret key in the trusted execution environment after verifying that the second post-state root is equal to the first post-state root, using the signature as a proof, and sending the proof to a blockchain ledger of a mainnet by using a second mainnet transaction.

9. A method for implementing rollup of a layer 2 network, comprising:
pulling, by a sequencer of the layer 2 network, transactions from a transaction pool, sorting and batching the pulled transactions, and then sending the batched transactions to an executor participant;
performing S5 and S6 in parallel:
the executor participant generates a first transaction root of the post-order batched transactions by using one executor, groups transactions that do not have a dependency relationship, and then sends different groups to at least two executors; at least two executors sequentially execute different transaction groups in the batched transactions respectively based on initial states obtained before the post-order batched transactions are executed, and one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, wherein the prover is implemented by using a trusted execution environment; and
the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

10. The method according to any one of claims 1 to 9, wherein the provers are at least two in number and are configured to execute in parallel.

11. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, generate a first transaction root of the batched transactions, execute the batched transactions sequentially based on initial states obtained before the batched transactions are executed, and generate a first post-state root; and the sequencer is configured to send, to a prover of the layer 2 network, the batched transactions, the first transaction root, an SPV proof of a batched transaction read set obtained before the batched transactions are executed, and a first pre-state root and the first post-state root that correspond to the initial states; and
the prover is configured to verify the first transaction root and verify the first pre-state root based on the SPV proof of the batched transaction read set; execute the batched transactions sequentially after the first transaction root and the first pre-state root are verified successfully, and generate a second post-state root; and put a signature to information of the batched transactions by using a secret key in a trusted execution environment after verifying that the second post-state root is equal to the first post-state root, use the signature as a proof, and send the proof to a blockchain ledger of the mainnet by using a second mainnet transaction.

12. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, and then send the batched transactions to an executor, wherein
the executor and a prover perform S1 and S2 in parallel:
S1: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, the initial states obtained before the post-order batched transactions are executed, and a first pre-state root and the first post-state root that correspond to the initial states, wherein the prover is implemented by using a trusted execution environment; and
S2: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

13. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, and then send the batched transactions to an executor, wherein
the executor and a prover perform S3 and S4 in parallel:
S3: the executor generates a first transaction root of post-order batched transactions, sequentially executes the post-order batched transactions based on initial states obtained before the post-order batched transactions are executed, and generates a first post-state root; and the executor sends, to the prover of the layer 2 network, the post-order batched transactions, the first transaction root, an SPV proof of a read set obtained before transactions in an (N+1)^{th} batch are executed, a first pre-state root, and the first post-state root, wherein the prover is implemented by using a trusted execution environment; and
S4: the prover verifies a first transaction root of pre-order batched transactions and verifies the first pre-state root based on an SPV proof of a pre-order batched transaction read set; and executes the pre-order batched transactions sequentially after the first transaction root and the first pre-state root are verified successfully, generates a second post-state root, signs information of the batched transactions by using a secret key in a trusted execution environment after verifying that the second post-state root is equal to the first post-state root, uses the signature as a proof, and sends the proof to a blockchain ledger of a mainnet by using a second mainnet transaction.

14. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, then group transactions that do not have a dependency relationship, and send different groups an executor participant;
the executor participant generates a first transaction root of the batched transactions by using one executor; at least two executors sequentially execute different transaction groups in the batched transactions respectively based on initial states obtained before the batched transactions are executed, and the one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, wherein the prover is implemented by using a trusted execution environment; and
the prover verifies the first transaction root of the batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

15. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, and then send the batched transactions to an executor participant;
the executor participant generates a first transaction root of the batched transactions by using one executor, groups transactions that do not have a dependency relationship, and then sends different groups to at least two executors; at least two executors sequentially execute different transaction groups in the batched transactions respectively based on initial states obtained before the batched transactions are executed, and one executor combines execution results of all the transaction groups and generates a first post-state root; and the executor participant sends, to a prover of the layer 2 network, the batched transactions, the first transaction root, the initial states obtained before the transactions are executed, and a first pre-state root and the first post-state root that correspond to the initial states, wherein the prover is implemented by using a trusted execution environment; and
the prover verifies the first transaction root of the batched transactions and the first pre-state root; and executes the batched transactions sequentially based on the initial states after the first transaction root and the first pre-state root are verified successfully, generates a second post-state root, signs information of the batched transactions by using a secret key in the trusted execution environment after verifying that the second post-state root is equal to the first post-state root, uses the signature as a proof, and sends the proof to a blockchain ledger of a mainnet by using a second mainnet transaction.

16. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, then group transactions that do not have a dependency relationship, and send different groups an executor participant;
the executor participant generates a first transaction root of post-order batched transactions by using one executor; at least two executors sequentially execute different transaction groups in the post-order batched transactions respectively based on initial states obtained before the post-order batched transactions are executed, and the one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, wherein the prover is implemented by using a trusted execution environment; and
the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.

17. A layer 2 network, comprising a transaction pool, a sequencer, and a prover, wherein
the transaction pool is configured to receive a transaction sent by a user on the layer 2 network;
the sequencer is configured to pull transactions from a transaction pool, sort and batch the pulled transactions, and then send the batched transactions to an executor participant;
an executor and the prover perform S5 and S6 in parallel:
S5: the executor participant generates a first transaction root of the post-order batched transactions by using one executor, groups transactions that do not have a dependency relationship, and then sends different groups to at least two executors; at least two executors sequentially execute different transaction groups in the batched transactions respectively based on initial states obtained before the post-order batched transactions are executed, and one executor combines execution results of all the transaction groups and generates a first post-state root; and the executor participant sends, to a prover of the layer 2 network, the post-order batched transactions, the first transaction root, the initial states obtained before the transactions are executed, and a first pre-state root and the first post-state root that correspond to the initial states, wherein the prover is implemented by using a trusted execution environment; and
S6: the prover verifies a first transaction root of pre-order batched transactions and the first pre-state root; and executes the pre-order batched transactions sequentially based on the initial states after the first transaction root and the first pre-state root are verified successfully, generates a second post-state root, signs information of the pre-order batched transactions by using a secret key in the trusted execution environment after verifying that the second post-state root is equal to the first post-state root, uses the signature as a proof, and sends the proof to a blockchain ledger of a mainnet by using a second mainnet transaction.
